# EUROPÄISCHE PATENTSCHRIFT

(11) **EP 4 045 436 B1**
(45) Veröffentlichungstag und Bekanntmachung des Hinweises auf die Patenterteilung: **28.06.2023**
(21) Anmeldenummer: 20803080.9
(22) Anmeldetag: 01.10.2020
(51) Int. Cl.: B65D 85/804

(54) **PORTIONIERBEHÄLTNIS AUS UMWELTVERTRÄGLICH ABBAUBAREM FASERMATERIAL**
DEGRADABLE CARTRIDGE
CAPSULE DÉGRADABLE

(30) Priorität: 14.10.2019 DE 102019127556
(43) Veröffentlichungstag der Anmeldung: 24.08.2022
(73) Patentinhaber: KIEFEL GmbH, 83395 Freilassing (DE)
(72) Erfinder: STEIN, Bernd, 83417 Kirchanschöring (DE); HAUSMANN, Matthias, 5091 Unken (AT); WABNIG, Erwin, 83313 Siegsdorf (DE); HALLETZ, Thomas, 83329 Waging am See (DE)
(74) Vertreter: DTS Patent- und Rechtsanwälte Schnekenbühl und Partner mbB
(86) Internationale Anmeldenummer: PCT/DE2020/000225
(87) Internationale Veröffentlichungsnummer: WO 2021/073669

(56) Entgegenhaltungen:
- EP-A1- 3 016 888
- EP-A1- 3 030 503
- EP-A1- 3 060 498
- EP-B1- 3 016 888
- EP-B1- 3 030 503
- EP-B1- 3 060 498

## Beschreibung

### Gebiet der Erfindung

Die Erfindung betrifft ein Portionierbehältnis aus umweltverträglich abbaubarem Fasermaterial, eine Faserformanlage und ein Verfahren zur Herstellung solcher Portionierbehältnisse.

### Hintergrund der Erfindung

Es ist wünschenswert, Bürger und Umwelt vor Kunststoffverschmutzung zu schützen. Insbesondere verursachen Einwegplastik-Produkte wie Plastikbesteck, Plastikgeschirr oder Verpackungsmaterialien wie beispielsweise Kaffeekapseln eine große Abfallmenge. Insofern besteht für Verpackungsmaterialien und Behältnisse aus Kunststoff ein steigender Bedarf an Ersatzmaterialien, mit denen diese Produkte aus recycelbaren Kunststoffen, Materialien mit weniger Kunststoffanteil oder gar aus kunststofffreien Materialien herzustellen.

Die Vorstellung, Naturfasern anstelle von klassischen Kunststoffen im Extrusionsverfahren zu verwenden, existiert mindestens schon seit Anfang der 1990er Jahre, siehe beispielsweise EP 0 447 792 B1 oder EP 3 060 498 A1. Rohstoffgrundlage ist hier, wie in den meisten faserverarbeitenden Verfahren, die Pulpe. Prinzipiell besteht die Pulpe aus Wasser, Naturfasern und einem Bindemittel wie zum Beispiel industrielle Stärke (Kartoffelstärke) und weist eine breiige Konsistenz auf.

Da Verbraucher an verschiedensten naturverträglichen Produkten mit unterschiedlichen Größen, Formen und Anforderungen interessiert sind und diese nicht unbedingt in sehr großen Stückzahlen nachfragen, wäre es wünschenswert, ein Herstellungsverfahren für umweltverträgliche Portionierbehältnisse wie Getränkekonzentrate oder Kaffeekapseln aus Naturfasern und eine entsprechende Maschine zur Verfügung zu haben, um diese Produkte (Formteile) effektiv, flexibel und mit guter Qualität reproduzierbar herstellen zu können.

### Zusammenfassung der Erfindung

Der Erfindung liegt die Aufgabe zugrunde, umweltverträgliche Portionierbehältnisse aus Naturfasern, eine entsprechende Maschine und ein Herstellungsverfahren bereitzustellen, mit dem diese Portionierbehältnisse effektiv, flexibel und mit guter Qualität reproduzierbar herzustellen sind.

Die Aufgabe der Erfindung wird gelöst durch ein Portionierbehältnis aus einem Behälter zur Aufnahme eines Genussmittels und einer Abdeckung zum Verschließen des Behälters zur Erzeugung eines abgeschlossenen Volumens innerhalb des Portionierbehältnisses, wobei zumindest der Behälter, vorzugsweise auch die Abdeckung, aus umweltverträglich abbaubarem Fasermaterial mit einer Faserformanlage mittels eines Faserformprozesses, insbesondere eines erfindungsgemäßen Faserformprozesses gemäß Anspruch 37, aus einer Pulpe als flüssige Lösung mit dem umweltverträglich abbaubarem Fasermaterial hergestellt ist, wobei zumindest der Behälter, vorzugsweise auch die Abdeckung, mit einem Barriereschichtsystem mit einer Barrierewirkung zumindest gegen ein Durchdringen von Feuchtigkeit, Wasser, Aromastoffen, Geschmacksstoffen, Geruchsstoffen und/oder nicht lebensmitteltauglichen Stoffen versehen ist.

Der Begriff "Portionierbehältnis" bezeichnet eine geschlossene Kavität, mit der ein Genussmittel aufbereitet, portioniert, dosiert, gebrüht, geschmacklich verändert werden kann. Dies kann unter Einfluss von außen (beispielsweise mittels Zugabe von heißen oder kaltem Wasser) geschehen oder lediglich für einen Verzehr das Genussmittel freigeben (beispielsweise als selbständige Verzehrportion oder als Dosierbehältnis zur Modifikation bereits vorhandener anderer Genussmittel). Genussmittel bezeichnen alle Nahrungs- oder Nahrungsergänzungsmittel, die vom Menschen, Tieren oder Pflanzen zu deren Genuss durch Mund oder Nase aufgenommen werden können. Genussmittel können dabei beispielsweise Getränke, Getränkezusätze, Konzentrate für Getränke, Substanzen für Brühvorgänge (beispielsweise Kaffeepulver), Gewürze, Gewürzmischungen, Fertigsuppen, Nahrungszusätze, Brühwürfel etc. sein und in fester, flüssiger oder pulvriger Form im Portionierbehältnis vorhanden sein. Der Behälter und die Abdeckung sind Komponenten des Portionierbehältnisses und können gemeinsam oder separat zueinander hergestellt werden. Bei einer separaten oder gemeinsamen Herstellung können diese nachfolgend zum Portionierbehältnis verbunden oder zusammengesetzt werden. Diese Verbindung kann reversible ausgeführt oder eine feste, nicht zur Trennung vorgesehene Verbindung sein. Das Genussmittel wird vorzugsweise vor der Aufbringung der Abdeckung auf den Behälter in den Behälter eingefüllt. Alternativ könnte die Abdeckung auch eine Einfüllöffnung aufweisen, durch die das Genussmittel nach Verschließen des Behälters mit der Abdeckung eingefüllt wird. Die Abdeckung kann mit dem Behälter beispielwese durch Verkleben mit einem Klebemittel, durch Verpressen der Abdeckung mit dem Behälter (vorzugsweise sind beide Komponenten aus Fasermaterial hergestellt), mittels mechanischer Verbindungsmittel (Klemmen, Klammern etc.) oder mittels an Behälter und Abdeckung vorhandene Gewinde aufeinander geschraubt oder mittels Rillen, Vorsprünge etc. aufeinander geklickt, geklemmt, eingerastet werden.

Der Begriff "umweltverträglich abbaubarem Fasermaterial" bezeichnet Fasermaterialien, die sich unter Umwelteinflüssen wie Feuchtigkeit, Temperatur und/oder Licht zersetzen lassen, wobei der Zersetzungsprozess kurzfristig erfolgt, also beispielsweise im Bereich von Tagen, Wochen oder wenigen Monaten. Das "umweltverträglich abbaubare Fasermaterial" wird im Folgenden der Einfachheit halber auch zum Teil nur als "Fasermaterial" bezeichnet. Hierbei sollen vorzugsweise weder vom Fasermaterial noch von den Zersetzungsprodukten eine Umweltgefährdung oder Kontamination ausgehen. Fasermaterialien, die im Sinne der vorliegenden Erfindung ein umweltverträglich abbaubarem Fasermaterial darstellen, sind beispielsweise Naturfasern gewonnen aus Zellstoff, Papier, Pappe, Holz, Gras, Pflanzenfasern, Zuckerrohresten, Hanf etc. oder aus deren Bestandteilen oder Teilen davon und/oder entsprechend recyceltes Material. Ein umweltverträglich abbaubarem Fasermaterial kann aber auch künstlich hergestellte Fasern wie beispielsweise PLA (Polylactide) etc. bezeichnet, die den voranstehenden Fasermaterialien entsprechen oder deren Eigenschaften besitzen. Vorzugsweise ist das umweltverträglich abbaubare Fasermaterial kompostierbar. Vorzugsweise ist das umweltverträglich abbaubare Fasermaterial und die daraus hergestellten Behältnisse für die Einbringung in den Wertstoffkreislauf der deutschen Biotonne und als Ressource für Biogasanlagen geeignet. Vorzugsweise sind die Fasermaterialien und die daraus hergestellten Behältnisse biologisch abbaubar gemäß EU-Norm EN 13432.

Der Begriff "Pulpe" bezeichnet fluide Massen, die Fasern enthalten, hier das umweltverträglich abbaubarem Fasermaterial. Der Begriff "flüssig" bezeichnet hier den Aggregatzustand der Pulpe, wobei die flüssige Pulpe das umweltverträglich abbaubare Fasermaterial in Form von Fasern umfasst. Hierbei können die Fasern als einzelne Fasern, als Fasergebilde oder Fasergruppe aus mehreren zusammenhängenden Faser vorliegen. Die Fasern stellen das Fasermaterial unabhängig davon dar, ob sie sich als einzelne Fasern, als Fasergebilde oder Fasergruppe in der Pulpe befinden. Hierbei sind die Faser in der flüssigen Lösung so gelöst, dass sie mit möglichst gleicher Konzentration ortsunabhängig in der flüssigen Lösung schweben, beispielsweise als Gemisch oder Suspension aus flüssiger Lösung und Fasermaterial. Dazu kann beispielsweise die Pulpe in manchen Ausführungsformen entsprechend temperiert und/oder umgewälzt werden. Die Pulpe besitzt vorzugsweise eine niedrige Stoffdichte, d.h. einen Anteil von Fasermaterial kleiner 8%. In einer Ausführungsform wird im erfindungsgemäßen Verfahren eine Pulpe mit einem Anteil an umweltverträglichem abbaubarem Fasermaterial kleiner 5%, vorzugsweise kleiner 2%, besonders bevorzugt zwischen 0,5% und 1,0 %, verwendet. Dieser geringe Anteil an Fasermaterial kann unter anderem eine Verklumpung des Fasermaterials in der flüssigen Lösung vermeiden, sodass das Fasermaterial noch mit guter Qualität am Saugwerkzeug anformbar ist. Verklumptes Fasermaterial kann zwar durch das Saugwerkzeug angesaugt werden, würde aber vermutlich ein Portionierbehältnis mit fluktuierender Schichtdicke zur Folge haben, was in der Produktion der Portionierbehältnisse nach Möglichkeit zu vermeiden ist. Insofern sollte der Anteil des Fasermaterials in der Pulpe klein genug sein, damit ein Verklumpen oder ein Aneinanderketten nicht oder nur in einem vernachlässigbaren Maße erfolgt. Die flüssige Lösung kann dabei jede für den Faserformprozess geeignete Lösung sein. Beispielsweise kann die Pulpe eine wässerige Lösung mit dem umweltverträglichem abbaubarem Fasermaterial sein. Eine wässrige Lösung stellt unter anderem eine einfach handhabbare Lösung dar.

Der Faserformprozess bezeichnet die Prozessschritte, die an der Formung des Portionierbehältnis bzw. seiner Bestandteile beteiligt sind, beginnend mit der Bereitstellung der Pulpe, des Anformens des Behälters und/oder der Abdeckung im Saugwerkzeug aus dem Fasermaterial aus der Pulpe, des Vorpressens dieser angeformten Komponenten des Portionierbehältnisses, des Heißpressen des Behälters und/oder der Abdeckung und gegebenenfalls des Beschichtens des Behälters und/oder der Abdeckung mit funktionalen Schichten wie Barriereschichten, wobei das Beschichten an jeder dafür für die jeweilige aufzubringende Schicht geeigneten Stelle im Faserformprozess angeordnet sein kann. Mit diesem Faserformprozess besitzt das Fasermaterial des endgeformten Portionierbehältnisses nur noch einen so geringen Anteil an flüssiger Lösung, dass das Portionierbehältnis formstabil für alle nachfolgenden Prozesse nach der Endformung ist. Hierzu tragen die einzelnen Schritte des Anformen, Vorpressens und Endformen mittels Heißpressstation (Heißpressen) einzeln oder gemeinsam in Summe bei.

Das Barriereschichtsystem kann eine oder mehrere funktionale Schichten umfassen, die beispielsweise als Feuchtigkeits-, Wasser-, Aroma-, Fett-, Öl-, Säure-, Geruchs- oder Geschmacksbarrieren oder als Barriere gegen Gase wie beispielsweise O₂ und N₂, nicht lebensmitteltaugliche Stoffe oder alle Stoffe, die zur Verderblichkeit von Lebensmitteln beitragen, für das Portionierbehältnis dienen. Solche Eigenschaften werden beispielsweise zumindest teilweise durch Lack- oder Wachsschichten mit Dicken von 0,02 bis 0,1mm oder Keramikschichten von 0,0005 bis 0,02mm (z.B. eine SiOx-Schicht) zur Verfügung gestellt. Auf aufgetragene Fasermaterialien können als weitere Schicht weitere Fasermaterialien auf die angeformten Behälter und/oder Abdeckungen aufgetragen werden, die hoch gemahlen sind und eine Dicke von 0,1mm bis 0,3mm aufweisen, und die zumindest solche Eigenschaften teilweise besitzen. In einer weiteren Ausführungsform ist die funktionale Schicht mit Barrierewirkung daher eine Wachsschicht, Lackschicht oder eine keramische Schicht, vorzugsweise eine SiOx-Schicht oder eine Glaskeramik.

Die Portionierbehältnisse bzw. deren Behälter und Abdeckungen können dabei eine beliebige Form, hier auch als Kontur bezeichnet, aufweisen, sofern diese Form (oder Kontur) mit der erfindungsgemäßen Faserformanlage bzw. mit dem erfindungsgemäßen Verfahren herstellbar ist bzw. sich die Faserformanlage bzw. das Verfahren für die Herstellung dieser Form (oder Kontur) eignet. Hierbei können die für den Faserformprozess verwendeten Komponenten auf die jeweilige Form (oder Kontur) des Portionierbehältnisses, des Behälters und der Abdeckung angepasst sein. Bei unterschiedlichen Portionierbehältnisses, Behältern und Abdeckungen mit unterschiedlichen Formen (oder Konturen) können unterschiedliche entsprechend angepasste Komponenten wie beispielsweise das Saugwerkzeug, der Saugkopf, die Vorpressstation, die Heißpressstation etc. verwendet werden.

Das erfindungsgemäße Portionierbehältnis stellt somit ein umweltverträglich abbaubares Produkt aus Naturfasern dar, das effektiv, flexibel und mit guter Qualität reproduzierbar herstellbar ist.

In einer Ausführungsform ist das Barriereschichtsystem aus biokompatiblen Materialien aufgebaut. Biokompatible Materialien sind alle Materialien, die keinen negativen Einfluss auf Lebewesen in ihrer Umgebung haben. Solche Materialien stellen in Portionierbehältnisse für Genussmittel kein gesundheitliches Risiko für die Benutzer dar. Biokompatible Materialien sind beispielweise SiOx oder Titanlegierungen.

In einer weiteren Ausführungsform ist das Barriereschichtsystem auf einer inneren Oberfläche des Behälters, vorzugsweise auch auf einer inneren Oberfläche der Abdeckung, aufgebracht. Die inneren Oberflächen bezeichnen dabei die Oberflächen, die dem abgeschlossenen Volumen innerhalb des Portionsbehältnisses zugewandt sind. Da das Genussmittel ohne Barriereschicht mit den inneren Oberflächen in Kontakt steht, schützen solche Schichte dort angebracht das Genussmittel vor etwaigen Stoffen, die aus dem Fasermaterial oder durch das Fasermaterial hindurch in das abgeschlossene Volumen gelangen könnten. Gleichermaßen verhindern solche Schichten dort angebracht, dass Stoffe aus dem Genussmittel in das Fasermaterial eindringen könnten, die man für die jeweilige Anwendung lieber im Genussmittel behalten würde, wie beispielsweise Aromastoffe.

In einer weiteren Ausführungsform umfasst das Barriereschichtsystem dazu eine Wachsschicht, eine Lackschicht, eine Schicht aus PTFE oder eine keramische Schicht, vorzugsweise eine SiOx-Schicht oder eine Glaskeramik. Das Portionierbehältnis kann dabei mit Wachs und/oder Lack besprüht oder mit PTFE oder keramischen Schichten beschichtet werden. Der Begriff "Wachs" bezeichnet eine organische Verbindung, die bei über etwa 40 °C schmilzt und dann eine Flüssigkeit niedriger Viskosität bildet. Dadurch sind Wachse leicht mittels Sprühen auf eine Oberfläche aufzubringen. Ihre niedrige Schmelztemperatur ermöglicht es, Fasermaterialien mit Wachs zu tränken oder zu imprägnieren. Der Eindringprozess des Wachses in das Fasermaterial kann durch erhöhte Temperaturen oberhalb der Schmelztemperatur unterstützt werden. Wachse sind nahezu unlöslich in Wasser, aber löslich in organischen, unpolaren Medien. Wachse können in ihrer chemischen Zusammensetzung und Herkunft sehr unterschiedlich sein und können hier Wachse gemäß der Definition der Deutschen Gesellschaft für Fettwissenschaft sein. Die hier verwendbaren Wachse können dabei natürliche Wachse wie tierische Wachse (beispielsweise Wollwachs, Chinawachs, Bienenwachs, Talg oder Insektenwachs) oder pflanzliche Wachse (Beispielsweise Zuckerrohrwachs, Carnaubawachs, Candillawachs, Korkwachs, Guarumawachs, Ouricuriwachs, Palmenwachs, Espartowachs, Bauwollwachs, Reiskleiewachs, Flachswachs, Torfwachs, Rosenwachs, Jasminwachs, Peethe-Wachs, Myrtenwachs oder Wachsfeigenwachs) sowie teilsynthetische oder synthetische Wachse (beispielsweise Sojawachs, Rapswachs, Rizinuswachs) umfassen. Vorzugsweise ist dabei das Wachs ein als Lebensmittelzusatzstoff zugelassenes Wachs. Der Begriff "Lack" bezeichnet flüssige oder auch pulverförmige Beschichtungsstoffe. Der Lack bzw. die Lackschicht kann dünn auf Gegenstände aufgetragen werden und wird durch chemische oder physikalische Vorgänge (zum Beispiel Verdampfen des Lösungsmittels) zu einem durchgehenden, festen Film (Schicht) aufgebaut. Lacke bestehen in der Regel aus Bindemitteln wie Harze, Dispersionen oder Emulsionen, Füllstoffen, Pigmenten, Lösungsmitteln und Additiven. Vorzugsweise ist der Lack ein für Lebensmittel zugelassener Lack. Der Begriff "PTFE" bezeichnet Polytetrafluorethylen, das ein vollfluoriertes Polymer ist. Die PTFE Beschichtung wird üblicherweise aufgetragen und anschließend einer Temperaturbehandlung unterzogen. Eine PTFE Beschichtung wird als Antihaftbeschichtung bei vielen Anwendungen eingesetzt. PTFE ist sehr reaktionsträge. Selbst aggressive Säuren können diese Beschichtung nicht angreifen. Der Grund liegt in der besonders starken Bindung zwischen den Kohlenstoff- und den Fluoratomen. So gelingt es vielen Substanzen nicht, die Bindungen aufzubrechen und mit PTFE zu reagieren. Wegen seiner chemischen Trägheit wird PTFE als Beschichtung u.a. dort eingesetzt, um die beschichteten Unterlagen zu schützen. Die vielfältigen und relativ einfachen Möglichkeiten der Compoundierung ermöglichen spezielle Mischungen für diverse Anwendungen.

In einer weiteren Ausführungsform ist das Barriereschichtsystem auch auf einer äußeren Oberfläche des Behälters und/oder der Abdeckung aufgebracht. Damit kann unter anderem verhindert werden, dass Stoffe von außen in das Fasermaterial gelangen, was für die jeweilige Anwendung ungewünscht ist. Das könnte beispielsweise Feuchtigkeit sein, die die Beständigkeit des Fasermaterial im Portionierbehältnis vermindert.

In einer weiteren Ausführungsform besteht das außen aufgebrachte Barriereschichtsystem aus einem Material, das bedruckbar ist. Somit können auf den Portionierbehältnissen nützliche Informationen haltbar dargestellt werden.

In einer weiteren Ausführungsform ist der Behälter aus umweltverträglich abbaubarem Fasermaterial aus einen erstes Formteil aus einem ersten Fasermaterial aus einer ersten Pulpe und aus einem zweiten Formteil aus einem Fasermaterial aus einer sich von der ersten Pulpe unterscheidenden zweiten oder weiteren Pulpe gebildet, wobei die ersten und zweiten Formteile mittels eines Vorpressdrucks in der Vorformstation über ihre jeweiligen zueinander zugewandten Oberflächen miteinander verbunden sind. Hiermit können Behälter mit funktionalen Schichten, beispielsweise Barriereschichten versehen werden, ohne dass dafür eine gesonderte zusätzliche Beschichtungstechnik im Faserformprozess angewendet werden muss. Die Haftung der beiden Teile auf Fasermaterial ist durch den Faserformprozess selbst gegeben, sodass keine zusätzlichen Haftvermittler zwischen diesen Teilen aus Fasermaterial angebracht werden müssen, was den Faserformprozess vereinfacht. Das äußere Formteil kann beispielsweise aus eine bedruckbaren Material oder aus einem Material, das beständig gegen Umwelteinflüsse ist, hergestellt werden, während das innere Formteil an die Bedürfnisse des jeweiligen Genussmittels angepasst sein kann.

In einer weiteren Ausführungsform besitzt das umweltverträglich abbaubare Fasermaterial des Portionsbehälters nach Endformung des Behälters im Faserformprozess einen Anteil an flüssiger Lösung kleiner als 10%, bevorzugt kleiner als 7%. Mit diesem Gehalt an flüssige Lösung ist der Behälter formstabil für die nachfolgenden Prozesse.

In einer weiteren Ausführungsform ist das umweltverträglich abbaubare Fasermaterial des Portionsbehältnisses dafür durch ein doppeltes Pressen umfassend ein Vorpressen in einer Vorformstation und Heißpressen in einer Heißpressstation mit einer Temperatur höher als beim Vorpressen entsprechend verdichtet.

In einer weiteren Ausführungsform enthält das umweltverträglich abbaubare Fasermaterial keinen organischen Binder, vorzugsweise ebenfalls keinen nicht-organischen Binder. Ohne Binder sind die hergestellten Portionierbehältnisse aus ursprünglich umweltverträglich abbaubarem Fasermaterial weiterhin umweltverträglich abbaubar, da kein umweltkritischer Binder, vorzugsweise überhaupt kein Binder, verwendet wird. Der Verzicht auf Binder wird durch die Kombination der Anform-, Vorpress- und Heißpressschritte ermöglicht, die in ihrer Gesamtheit eine gute mechanische Verkettung der einzelnen Fasern miteinander im Fasermaterial des Portionierbehältnisses gewährleisten. Die mechanische Verkettung ist dabei so stark, dass zur Formstabilität des Formteils auf Binder verzichtet werden kann.

In einer weiteren Ausführungsform besteht das umweltverträglich abbaubare Fasermaterial im Wesentlichen aus Fasern mit einer Faserlänge kleiner als 5mm. Bei Fasern dieser Länge erhält man unter anderem eine gute homogene Lösung des Fasermaterials in der flüssigen Lösung, sodass der Verklumpungsgrad der Fasern in der Pulpe hinreichen gering ist für einen guten reproduzierbaren Faserformprozess für das Portionierbehältnis bzw. den Behälter und die Abdeckung. Außerdem verringern kürzere Fasern die Oberflächenrauigkeit und Porosität des Fasermaterials, sodass eventuelle Beschichtungen leichter auf dem Fasermaterial aufzubringen sind.

In einer weiteren Ausführungsform ist eine Variation einer Wanddicke des Behälters, vorzugsweise auch der Abdeckung, über alle Flächen des Behälters kleiner 7% gegenüber einer Solldicke. Damit sind die Portionierbehältnisse für spätere Verarbeitungsmaschinen zur Freisetzung des Genussmittels, beispielsweise Kaffeemaschinen für Kaffeepads als Portionierbehältnisse, gut geeignet.

In einer weiteren Ausführungsform ist der Behälter so geformt, dass alle Flächen des Behälters einen Winkel von mindestens 3 Grad zu einer Symmetrieachse, die senkrecht auf einer Bodenfläche des Behälters ausgerichtet ist, besitzen. Dadurch wird sichergestellt, dass der Heißpressdruck an allen Flächen des Behälters bzw. der Abdeckung angelegt werden kann. Auf Flächen parallel zur Druckrichtung beim Heißpressen kann kein Druck ausgeübt werden. Der Heißpressdruck wird beispielsweise über eine Presseinheit, vorzugsweise eine Kolbenstange, hydraulisch an die Heißpressstation angelegt, wobei diese Presseinheit beispielsweise auf das Heißpress-Oberwerkzeug drückt, das dann wiederum auf das ruhende Heißpress-Unterwerkzeug drückt, mit dem Behälter oder der Abdeckung dazwischen. Die Anordnung könnte auch umgekehrt ausgeführt sein.

In einer weiteren Ausführungsform ist der Behälter aus einer Wandfläche und der Bodenfläche einstückig geformt. Das erleichtert die Herstellung und Dichtigkeit des Behälters.

In einer weiteren Ausführungsform sind das Portionierbehältnis oder deren Bestandteile stapelbar. Das erleichtert die logistischen Prozesse bei der Lagerung, Transport und Bereitstellung für den Kunden, da gestapelte Produkte einen geringeren Platzbedarf besitzen als nicht stapelbare Produkte. Bestandteile sind hier Behälter und Abdeckung.

In einer weiteren Ausführungsform umfasst der Behälter an seinem der Bodenfläche gegenüberliegenden Ende einen umlaufenden ebenen Behälterrand. Der umlaufende Rand kann zur Befestigung der Abdeckung und/oder zur Stapelbarkeit verwendet werden.

In einer weiteren Ausführungsform weist der Behälter eine Stapelkante auf. Diese Stapelkante ermöglicht eine definierte Stapelung der Behälter. Die Stapelkannte kann an unterschiedlichen Positionen des Behälters mit unterschiedlichen Formen ausgeführt sein. Beispielsweise kann die Stapelkante Teil des umlaufenden Behälterrands sein.

In einer weiteren Ausführungsform ist das Portionierbehältnis verzehrbar. Bei verzehrbaren Fasermaterialien ist das Portionierbehältnis ohne Rückstände umweltverträglich abbaubar.

In einer weiteren Ausführungsform kann das Portionierbehältnis mindestens ein zweites Genussmittel aufnehmen. Dadurch wird die Geschmacks-, Verarbeitungs- und Verwendungsvielfalt des Portionierbehältnisses erhöht.

In einer weiteren Ausführungsform ist dazu das abgeschlossene Volumen in mindestens zwei voneinander getrennte Volumina aufgeteilt. Dadurch werden die beiden Genussmittel nicht vermischt, bis es zum Gebrauch des Portionierbehältnisses durch den Nutzer kommt. In einer weiteren Ausführungsform weist der Behälter dazu eine Trennwand zwischen den getrennten Volumina auf.

In einer weiteren Ausführungsform umfasst die Abdeckung mindestens einen Auslass für das Genussmittel im Volumen. Dadurch kann das Genussmittel beispielsweise aus dem Portionierbehältnis ausgegossen oder ausgetrunken werden. Vorzugsweise besitzt jedes Volumen einen der Auslässe individuell.

In einer weiteren Ausführungsform teilt die Abdeckung einen eingehenden Flüssigkeitsstrom in das Volumen in mindestens zwei Flüssigkeitsströme in jeweilig getrennte Volumina auf. So kann das Portionierbehältnis beispielsweise zweimal nacheinander verwendet werden. Bei einem Brühvorgang kann beispielsweise gewählt werden, ob der Brühvorgang stärker oder schwächer dosiert werden soll. In einer weiteren Ausführungsform besitzt dazu auch die Bodenfläche mindestens zwei voneinander getrennte Anstiche.

In einer weiteren Ausführungsform weist die Abdeckung einen wiederverschließbaren Anstich auf. Dadurch kann ein noch nicht vollständig verbrauchtes Genussmittel in Portionierbehältnis vor Einflüssen von außen geschützt werden, beispielsweise Abkühlung, Aromaveränderung etc.

In einer weiteren Ausführungsform weist der Behälter an dessen Bodenfläche einen Standring am Übergang zwischen Bodenfläche und Wandfläche auf, um beispielsweise standfest auf einer Unterlage abgestellt werden zu können.

In einer weiteren Ausführungsform weist der Behälter einen Übergang von Bodenfläche zur Wandfläche auf, der abgerundet ist oder eine oder mehrere diskrete Konturen, vorzugsweise Rippen oder Sicken, auf. Dies fördert unter anderem die Stabilität des Behälters.

In einer weiteren Ausführungsform weist der Behälter innerhalb der Wandfläche eine oder mehrere diskrete Konturen, vorzugsweise Rippen oder Sicken auf. Dies fördert unter anderem ebenfalls die Stabilität des Behälters.

In einer weiteren Ausführungsform weist der Behälter eine Wandfläche mit unterschiedlichen Dicken auf. Damit kann der Behälter lokal verstärkt werden und an anderen Stellen, wo diese Verstärkung nicht notwendig ist, Material gespart werden.

In einer weiteren Ausführungsform ist die Bodenfläche als Hohlboden ausgebildet. Dies fördert unter anderem ebenfalls die Stabilität des Behälters.

In einer weiteren Ausführungsform ist die Bodenfläche aufgeraut oder weist eine Riffelung auf. Das erhöht die Rutschfestigkeit des Portionierbehältnis auf einer Unterlage.

In einer weiteren Ausführungsform ist zumindest der Behälter, vorzugsweise das gesamte Portionierbehältnis, sphärisch geformt. Dies erleichtert die Bereitstellung der Portionierbehältnisses beispielsweise in einem entsprechenden Spendergestell.

Die voranstehenden Ausführungsformen, insbesondere die Stapelbarkeit des Portionierbehältnisses, die dafür benötigte Stapelkante, der umlaufende Behälterrand, die Möglichkeit der Aufnahme eines zweiten Genussmittels, die mögliche Gestaltung mit zwei getrennten Volumina, , die Trennwand, die Möglichkeit der Aufteilung in zwei Flüssigkeitsströme in die getrennten Volumina, die getrennten Anstiche, der wiederverschließbare Anstich, der Standring, die diskreten Konturen, der Hohlboden, die Riffelungen, die sphärische Form werden insbesondere dadurch ermöglicht, dass der erfindungsgemäße Faserformprozess ein formstabiles Portionierbehältnis bereitstellen kann. Dies wird beispielsweise auch dadurch erreicht, dass die Formstabilität auf das dafür notwendige Maß erhöht, indem der Anteil an flüssiger Lösung im Fasermaterial des Portionierbehältnisses nach dem Endformen ausreichend verringert ist, beispielsweise kleiner als 10%, bevorzugt kleiner als 7%.

In einer weiteren Ausführungsform umfasst das Portionierbehältnis das Genussmittel und die Abdeckung verschließt den Behälter. Damit bleibt das Genussmittel länger frisch und verwendbar.

In einer weiteren Ausführungsform ist das Portionierbehältnis eine Heißgetränkekapsel, vorzugsweise eine Kaffeekapsel.

Die Erfindung betrifft des Weiteren eine Faserformanlage zur Herstellung von Portionierbehältnissen nach einem der voranstehenden Ansprüche umfassend
- ein Reservoir zur Bereitstellung einer Pulpe als flüssige Lösung mit umweltverträglich abbaubarem Fasermaterial;
- eine Anformstation mit einem Saugwerkzeug mit einer Vielzahl an Saugköpfen angepasst an die Kontur von Behälter und/oder Abdeckung der herzustellenden Portionierbehältnisses zum Anformen der Behälter und/oder Abdeckungen mittels Ansaugen der Pulpe in die jeweiligen Saugköpfe;
- eine Vorformstation zum Vorpressen der angeformten Behälter und/oder Abdeckung der Portionierbehältnisses;
- eine Heißpressstation zum Endformen der vorgeformten Behälter und/oder Abdeckungen der Portionierbehältnisse;
- eine Beschichtungsstation zum Aufbringen eines Barriereschichtsystems auf die angeformten, vorgeformten oder endgeformten Behälter und/oder Abdeckungen der Portionierbehältnisse; und
- eine Ausgabestation zum Ausgeben der endgeformten Behälter und/oder Abdeckungen oder der Portionierbehältnisse aus der Faserformanlage.

Die Pulpe kann mit einer Temperatur kleiner oder gleich 80°C, bevorzugt kleiner oder gleich 50°C, besonders bevorzugt mit Raumtemperatur, bereitgestellt werden. Diese geringen Temperaturen ermöglichen unter anderem eine einfache Prozessführung, insbesondere bei Raumtemperatur.

Das Saugwerkzeug bezeichnet hier das Werkzeug, in dem der oder die Saugköpfe zum Anformen des Formteils angeordnet sind. Bei einem einzelnen Saugkopf ist dieser auch das Saugwerkzeug. Bei mehreren simultan betriebenen Saugköpfen sind diese allesamt in dem gemeinsamen Saugwerkzeug (Multiwerkzeug) angeordnet, sodass mit dem Bewegen des Saugwerkzeugs die einzelnen Saugköpfe im Saugwerkzeug gleichermaßen mitbewegt werden. Die Medienversorgung des Saugwerkzeugs mit mehreren Saugköpfen wird im Saugwerkzeug dabei in geeigneter Weise zu den einzelnen Saugköpfen geführt.

Zum Anformen wird das Saugwerkzeugs in die Pulpe zumindest zum Teil eingetaucht, um mit einem über das Saugwerkzeug an die Pulpe angelegten Unterdrucks das Fasermaterial aus der Pulpe herauszusaugen beziehungsweise die Pulpe mit darin gelöstem Fasermaterial anzusaugen wird. Die Eintauchtiefe des Saugwerkzeugs in die Pulpe hängt von der jeweiligen Anwendung und dem jeweiligen Faserformprozess ab und kann sich je nach Anwendung und gegebenenfalls dem anzuformenden Portionierbehältnis unterscheiden. In einer Ausführungsform ist die Saugkopf-Saugseite des Saugkopfes aus einem porösen Sieb gebildet, auf dessen der Pulpe zugewandten Pulpen-Seite die umweltverträglich abbaubare Faser aufgrund des Ansaugens zum Anformen des Behälters oder der Abdeckung des Portionierbehältnisses anhaftet. Das Sieb muss eine Porosität besitzen, damit die Pulpe samt Fasermaterial durch das Sieb angesaugt werden kann und die flüssige Lösung der Pulpe durch das Sieb hindurchtreten kann. Dennoch darf die Porosität des Siebes nicht zu groß sein, damit das Fasermaterial sich auf der Pulpen-Seite anhaften kann.

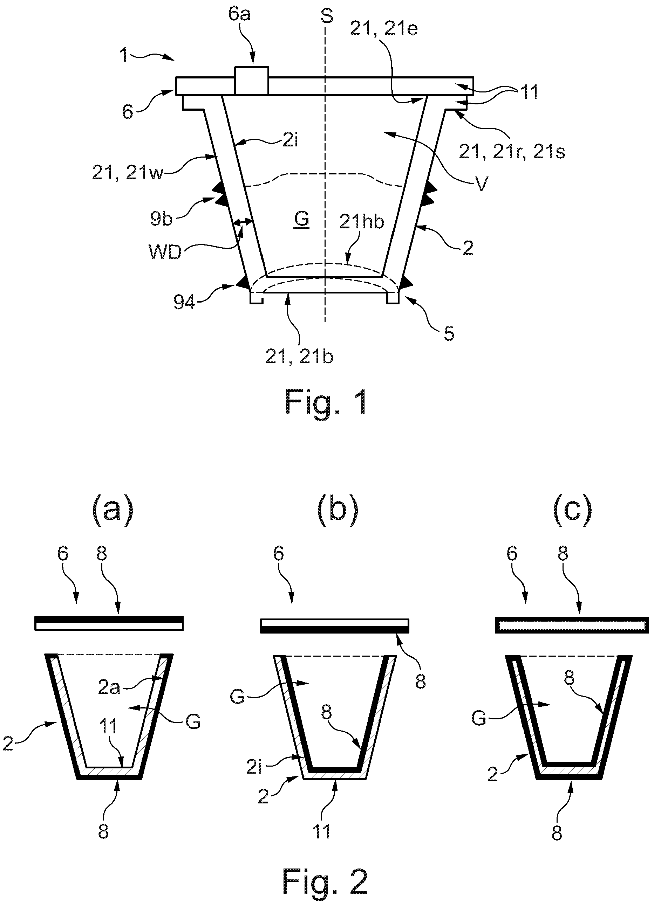

Hierbei kann der Saugkopf eine sogenannte Negativform besitzen. Als Negativform wird eine Form bezeichnet, wo sich die Saugseite des Saugkopfes, also die Seite, wo sich das Fasermaterial aufgrund der Saugwirkung des Saugkopfes ablagert und damit den Behälter oder die Abdeckung anformt, auf der Innenseite des Saugkopfes befindet, sodass diese Innenseite nach Aufsetzen des Saugkopfes auf die Pulpe oder Eintauchen des Saugkopfes in die Pulpe eine Kavität bildet, in die die Pulpe mit dem Fasermaterial eingesaugt wird (wie in Fig.2 dargestellt). Bei einer Negativform ist die Außenseite des späteren Behälters oder Abdeckung zur Innenseite des Saugkopfes gerichtet. Das Formteil (Behälter oder Abdeckung) sitzt nach Anformung daher innen auf der Innenseite des Saugkopfes. Das Formteil bezeichnet in der vorliegenden Erfindung den Behälter oder die Abdeckung des Portionierbehältnisses.

Hierbei kann der Saugkopf alternative auch eine sogenannte Positivform besitzen. Als Positivform wird eine Form bezeichnet, wo sich die Saugseite des Saugkopfes, also die Seite, wo sich das Fasermaterial aufgrund der Saugwirkung des Saugkopfes ablagert und damit das Formteil anformt, auf der Außenseite des Saugkopfes befindet, sodass diese Außenseite nach Aufsetzen des Saugkopfes auf die Pulpe oder Eintauchen des Saugkopfes in die Pulpe keine Kavität bildet. Bei einer Positivform ist die Innenseite des späteren Formteils zur Außenseiten des Saugkopfes gerichtet. Das Formteil sitzt nach Anformung daher auf der Außenseite des Saugkopfes auf.

Das Anformen des Formteils in der Anformstation bezeichnet ein erstes Formen des Formteils, wobei sich dieses aus vormals willkürlich in der Pulpe verteiltem Fasermaterial mittels Anlagerung des Fasermaterials an die Kontur des Saugkopfes mit der entsprechenden Kontur bildet. Das angeformte Formteil besitzt noch einen großen Anteil, beispielsweise 70% - 80%, an flüssiger Lösung, beispielsweise Wasser, und ist daher noch nicht stabil formbeständig. Das Vorpressen des angeformten Formteils in der Vorformstation verringert den Anteil der flüssigen Lösung im Formteil deutlich, beispielsweise auf 55% - 65%, sodass die Kontur des Formteils nun bereits wesentlich stabiler ist. Mit dem Heißpressen des vorgepressten Formteils in der Heißpressstation mit einem Heißpressdruck wird das Formteil bei weiterer Reduktion des Anteils der flüssigen Lösung im Formteil, beispielsweise auf unter 10%, vorzugsweise auf circa 7%, endgeformt, wonach es anschließend stabil und formbeständig ist.

Die Ausgabe des endgeformten Formteils mit der Ausgabestation bezeichnet die Abgabe des Formteils zum Weitertransport oder zur Weiterbearbeitung, beispielsweise zu Schneid-, Beschriftungs-, Bedruckungs-, und/oder Packstationen.

Die Beschichtungsstation zum Aufbringen eines Barriereschichtsystems kann dabei an jeder geeigneten Position des Faserformprozesses zwischen der Anformstation und der Ausgabestation angeordnet sein, um dieses auf die angeformten, vorgeformten oder endgeformten Behälter und/oder Abdeckung der Portionierbehältnisses aufzubringen. In einer Ausführungsform ist die Beschichtungsstation zur Ausführung eines physikalischen Schichtungsverfahren oder eine Gasphasenabscheidung, vorzugsweise Aufdampfen, Plasmabeschichten oder Aufsprühen, ausgestaltet.

Durch die Kombination der Anform-, Vorpress- und Heißpressschritte wird auf einfache Weise aus einem Fasermaterial ein Formteil hergestellt, das sehr flexibel je nach Ausgestaltung der Kontur des Saugkopfes Formteile mit unterschiedlichsten Konturen liefern kann. Hierbei stellt das Verhältnis Breite beziehungsweise Durchmesser zu Höhe des Formteils keinen einschränkenden oder kritischen Parameter für die Qualität der Herstellung der jeweiligen Formteile dar. Durch die Kombination der Anform-, Vorpress- und Heißpressschritte können die Formteile sehr reproduzierbar und mit großen Genauigkeit und Güte bezüglich Form und Schichtdicke der einzelnen Formteilabschnitte hergestellt werden. Die Faserformanlage ist in der Lage, Fasern unterschiedlichster Art zu verarbeiten, sofern diese so in Lösung gebracht werden können, dass eine größere Verklumpung der Fasern in der flüssigen Lösung vor der Verarbeitung vermieden werden kann. Insbesondere können auf diese Weise stabile Formteile einfach, effektiv und flexibel aus umweltverträglich abbaubarem Fasermaterial mit guter Qualität und guter Reproduzierbarkeit hergestellt werden.

Mit der erfindungsgemäßen Faserformanlage lassen sich Portionierbehältnisse als umweltverträglich abbaubares Produkt aus Naturfasern effektiv, flexibel und mit guter Qualität reproduzierbar herstellen. Insbesondere ermöglichen die verwendeten Stationen Anformstation, Vorformstation und Heißpressstation einzeln oder in Kombination miteinander, dass der Anteil an flüssiger Lösung im endgeformten Portionierbehältnis so niedrig ist, dass das Portionierbehältnis besonders formstabil ist.

In einer weiteren Ausführungsform umfasst die Vorformstation ein Vorpress-Unterwerkzeug, an das das Saugwerkzeug mit angeformtem Formteil (Behälter oder Abdeckung des Portionierbehältnisses) angesetzt wird, sodass es zwischen Vorpress-Unterwerkzeug und Saugwerkzeug angeordnet ist und das Saugwerkzeug mit dem Vorpressdruck auf das Vorpress-Unterwerkzeug gepresst wird. Das Saugwerkzeug ist zur Ausübung des Vorpressdrucks auf das Vorpress-Unterwerkzeug geeignet ausgestaltet. Hierbei kann das Saugwerkzeug auf ein ruhendes Vorpressunterwerkzeug gepresst werden oder das Vorpress-Unterwerkzeug wird auf ein ruhendes Saugwerkzeug gepresst. Dazu kann das Saugwerkzeug an einem Roboterarm befestigt sein, der den Vorpressdruck selber über das Saugwerkzeug auf das Vorpress-Unterwerkzeug ausübt. Hierbei kann analog zu einem Saugwerkzeug als Multiwerkzeug auch das Vorpress-Unterwerkzeug als Multiwerkzeug ausgeführt sein, um alle angeformten Formteile (Behälter oder Abdeckung des Portionierbehältnisses) des Saugwerkzeugs simultan zueinander mit dem Vorpressdruck zu beaufschlagen und damit das Vorpressen für alle Formteils simultan durchzuführen.

In einer weiteren Ausführungsform wird das Vorpressen bei einer Temperatur der Vorpressstation kleiner 80°C, vorzugsweise kleiner 50°C, besonders bevorzugt bei Raumtemperatur, durchgeführt. Eine zu hohe Temperatur würde den Flüssigkeitsgehalt im Formteil zu weit absenken, wodurch das Material für das nachfolgende Heißpressen bereits zu steif sein könnte. Gerade die Kombination aus Vorpressen und Heißpressen ermöglicht eine reproduzierbare Herstellung von Formteilen mit guter Qualität und einer geringen Ausschussmenge. In einer weiteren Ausführungsform wird das Vorpressen bei dem Vorpressdruck zwischen 0,2 N/mm² und 0,3 N/mm², vorzugsweise zwischen 0,23 N/mm² und 0,27 N/mm², durchgeführt. Diese gegenüber dem Heißpressdruck geringeren moderaten Drücke ermöglichen ein schonendes Verfestigen des Formteils unter moderater Flüssigkeitsreduktion, was für einen ausschussarmen Heißpressvorgang vorteilhaft ist.

In einer weiteren Ausführungsform umfasst die Heißpressstation ein Heißpress-Unterwerkzeug mit einer Heißpressseite angepasst an eine Kontur des Formteils und ein entsprechend geformtes Heißpress-Oberwerkzeug, wobei beim Übergeben das Formteil vom Saugwerkzeug auf das Heißpress-Unterwerkzeug auf- oder eingesetzt wird und beim Heißpressen das Heißpress-Oberwerkzeug auf das Heißpress-Unterwerkzeug mit dem dazwischen angeordneten Formteil gepresst wird. Je nachdem, ob die Saugköpfe des Saugwerkzeugs eine Negativform oder Positivform besitzen, wird das Formteil auf das Heißpress-Unterwerkzeug aufgesetzt (Negativform) oder eingesetzt (Positivform). Insofern ist die Heißpressseite bei einer Negativform die Außenseite und bei einer Positivform die Innenseite des Heißpress-Unterwerkzeugs. Entsprechend komplementär ist jeweils das Heißpress-Oberwerkzeug geformt. Die beiden Heißpress-Ober- und Unterwerkzeuge können im Zusammenspiel hohe Drücke bei hohen Temperaturen an das Formteil dazwischen anlegen. In einer weiteren Ausführungsform ist dafür zumindest das Heißpress-Unterwerkzeug aus Metall gefertigt. In einer weiteren Ausführungsform wird das Heißpressen bei einer Temperatur größer 150°C, vorzugsweise zwischen 180°C und 250°C, durchgeführt. Damit kann eine Reduktion der Flüssigkeit (oder Feuchtigkeit) im Formteil auf unter 10% erreicht werden. In einer weiteren Ausführungsform wird das Heißpressen bei dem Heißpressdruck höher dem Vorpressdruck durchgeführt. Damit kann eine Reduktion der Flüssigkeit (oder Feuchtigkeit) im Formteil auf unter 10% erreicht werden, insbesondere in Kombination mit obigen Temperaturen. In einer weiteren Ausführungsform wird dazu der Heißpressdruck zwischen 0,5 N/mm² und 1,5 N/mm², vorzugsweise zwischen 0,8 N/mm² und 1,2 N/mm², durchgeführt. In einer weiteren Ausführungsform wird der Heißpressdruck für eine Presszeit von weniger als 20s, bevorzugt dabei von mehr als 8s, besonders bevorzugt zwischen 10 und 14s, noch mehr bevorzugt von 12s, angelegt. Damit kann eine Reduktion der Flüssigkeit (oder Feuchtigkeit) im Formteil auf unter 10% erreicht werden, insbesondere in Kombination mit obigen Temperaturen und Heißpressdrücken.

In einer Ausführungsform umfasst die Faserformanlage eine Steuereinheit zur Steuerung des ausgeführten Verfahrens. Die Steuereinheit kann als Prozessor, separates Computersystem oder webbasiert ausgeführt sein und ist mit den zu steuernden Komponenten der Faserformanlage geeignet verbunden, beispielweise über Datenkabel oder drahtlos mittels WLAN, Funk oder anderer drahtloser Übertragungsmittel.

In einer weiteren Ausführungsform umfasst die Faserformanlage ein oder mehrere Montagestationen zur Befüllung der Behälter mit Genussmitteln und/oder zum Verschließen der Behälter mit den jeweiligen Abdeckungen. Die Montagestation zur Befüllung des Behälters kann dafür mit geeigneten Gieß- oder Schüttmitteln oder anderen Portionierungsmittels ausgestattet sein. Die Montagestation zum Verschließen des Behälters kann dazu ausgestaltet sein, die Abdeckung auf den Behälter zu kleben, klemmen, drücken oder aufzuschrauben.

Die Erfindung betrifft des Weiteren ein Verfahren zur Herstellung von erfindungsgemäßen Portionierbehältnissen mit einer erfindungsgemäßen Faserformanlage umfassend nachfolgende Schritte:
- Bereitstellen eines Reservoirs einer Pulpe als flüssige Lösung mit umweltverträglich abbaubarem Fasermaterial;
- Anformen von Behältern und/oder Abdeckungen der herzustellenden Portionierbehältnisse in eine Anformstation mit einem Saugwerkzeug mit einer Vielzahl an Saugköpfen angepasst an die Kontur von Behälter und/oder Abdeckung mittels Ansaugen der Pulpe in die jeweiligen Saugköpfe;
- Vorpressen der angeformten Behälter und/oder Abdeckungen der Portionierbehältnisse in einer Vorformstation;
- Endformen der vorgeformten Behälter und/oder Abdeckungen der Portionierbehältnisse in einer Heißpressstation;
- Aufbringen eines Barriereschichtsystems auf die angeformten, vorgeformten oder endgeformten Behälter und/oder Abdeckungen der Portionierbehältnisse in einer Beschichtungsstation; und
- Ausgeben der endgeformten Behälter und/oder Abdeckungen oder der Portionierbehältnisse aus der Faserformanlage mittels einer Ausgabeeinheit.

Mit der erfindungsgemäßen Faserformanlage lassen sich Portionierbehältnisse als umweltverträglich abbaubares Produkt aus Naturfasern effektiv, flexibel und mit guter Qualität reproduzierbar herstellen. Insbesondere ermöglichen die Schritte des Anformens, Vorpressens und Endformen mittels Heißpressstation (Heißpressen) einzeln oder in Kombination miteinander, dass der Anteil an flüssiger Lösung im endgeformten Portionierbehältnis so niedrig ist, dass das Portionierbehältnis besonders formstabil ist

In einer Ausführungsform des Verfahrens umfasst dieses einen der weiteren Schritte:
- Befüllen der Behälter mit Genussmitteln in einer Montagestation; und/oder
- Verschließen der Behälter mit den jeweiligen Abdeckungen in einer anderen Montagestation.

Es sei ausdrücklich darauf hingewiesen, dass zum Zwecke der besseren Lesbarkeit "min-destens"-Ausdrücke nach Möglichkeit vermieden wurden. Vielmehr ist ein unbestimmter Artikel ("ein", "zwei" etc.) im Normalfall als "mindestens ein, mindestens zwei, etc." zu verstehen, sofern sich nicht aus dem Kontext ergibt, dass dort "genau" die angegebene Anzahl gemeint ist.

An dieser Stelle sei ebenfalls noch erwähnt, dass im Rahmen der hier vorliegenden Patentanmeldung der Ausdruck "insbesondere" immer so zu verstehen ist, dass mit diesem Ausdruck ein optionales, bevorzugtes Merkmal eingeleitet wird. Der Ausdruck ist demzufolge nicht als "und zwar" und nicht als "nämlich" zu verstehen.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

### Kurze Beschreibung der Figuren

Zusätzlich sind weitere Merkmale, Effekte und Vorteile vorliegender Erfindung anhand anliegender Zeichnung und nachfolgender Beschreibung erläutert. Komponenten, welche in den einzelnen Figuren wenigstens im Wesentlichen hinsichtlich ihrer Funktion übereinstimmen, sind hierbei mit gleichen Bezugszeichen gekennzeichnet, wobei die Komponenten nicht in allen Figuren beziffert und erläutert sein müssen.

Die Zeichnung zeigen:
- Fig.1:: schematische Darstellung eines erfindungsgemäßen Portionierbehältnisses;
- Fig.2:: verschiedene Ausführungsformen von Behälter und Abdeckung mit Barriereschichtsystem (a) außen, (b) innen und (c) auf beiden Seiten der Behälter und Abdeckungen;
- Fig.3:: eine Ausführungsform des Behälters aus ersten und zweiten Formteilen aus Fasermaterial;
- Fig.4:: eine Ausführungsform des Portionierbehältnisses mit zwei separaten Volumina gefüllt mit jeweiligen Genussmitteln;
- Fig.5:: eine Ausführungsform der erfindungsgemäßen Faserformanlage;
- Fig.6:: eine andere Ausführungsform der erfindungsgemäßen Faserformanlage mit zwei Pulpe-Reservoirs mit unterschiedlichen Pulpen zur Herstellung von Behältern und/oder Abdeckungen aus ersten und zweiten Formteilen; und
- Fig.7:: eine Ausführungsform des erfindungsgemäßen Verfahrens.

### Ausführungsbeispiele

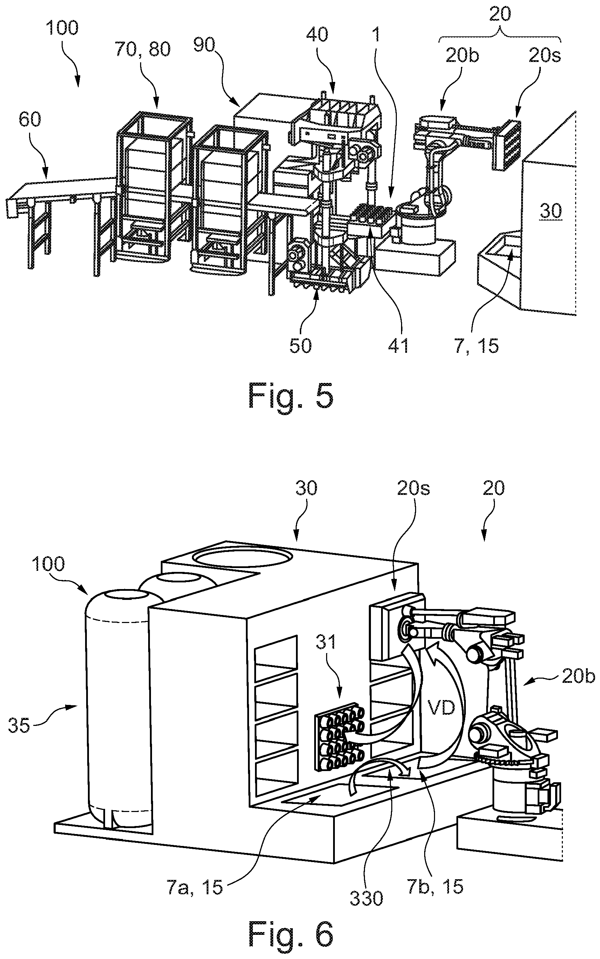

Fig.1 zeigt eine schematische Darstellung eines erfindungsgemäßen Portionierbehältnisses 1 aus einem Behälter 2 zur Aufnahme eines Genussmittels G, G' und einer Abdeckung 6 zum Verschließen des Behälters zur Erzeugung eines abgeschlossenen Volumens V innerhalb des Portionierbehältnisses 1, wobei der Behälter 2 und die Abdeckung 6 aus umweltverträglich abbaubarem Fasermaterial 11 hergestellt sind, beispielsweise mit einer Faserformanlage 100 (siehe dazu Fig. 5 und 6) mittels eines Faserformprozesses aus einer Pulpe 7, 7a, 7b als flüssige Lösung mit dem umweltverträglich abbaubarem Fasermaterial 11 hergestellt ist, wobei zumindest der Behälter 2, vorzugsweise auch die Abdeckung 6, mit einem Barriereschichtsystem 8 mit einer Barrierewirkung zumindest gegen ein Durchdringen von Feuchtigkeit, Wasser, Aromastoffen, Geschmacksstoffen, Geruchsstoffen und/oder nicht lebensmitteltauglichen Stoffen versehen ist (siehe dazu u.a. Fig.2). Das umweltverträglich abbaubarem Fasermaterial 11 des Portionsbehälters 1 kann dabei nach Endformung des Behälters 2 im Faserformprozess nur noch einen Anteil an flüssiger Lösung kleiner als 10%, bevorzugt kleiner als 7% besitzen. Das umweltverträglich abbaubare Fasermaterial 11 des Portionsbehältnisses 1 wird dafür durch ein doppeltes Pressen umfassend ein Vorpressen in einer Vorformstation 20 und Heißpressen in einer Heißpressstation 30 mit einer Temperatur höher als beim Vorpressen entsprechend verdichtet. Vorzugsweise enthält das umweltverträglich abbaubare Fasermaterial 11 keinen organischen Binder, vorzugsweise ebenfalls keinen nicht-organischen Binder, und besteht im Wesentlichen aus Fasern mit einer Faserlänge kleiner als 5mm. Das gezeigte Portionierbehältnis hat eine Variation einer Wanddicke WD des Behälters 2, vorzugsweise auch der Abdeckung 6, über alle Flächen des Behälters 2 kleiner 7% gegenüber einer Solldicke. Hierbei ist der Behälter 2 so geformt, dass alle Flächen 21 des Behälters 2 einen Winkel von mindestens 3 Grad zu einer Symmetrieachse S, die senkrecht auf einer Bodenfläche 21b des Behälters 2 ausgerichtet ist, besitzen. Gleiches gilt für die Abdeckung 6. Die Dicke der Abdeckung 6 in Symmetrierichtung S wird dabei nicht als Fläche angesehen. Der Behälter 2 aus einer Wandfläche 21w und der Bodenfläche 21b ist dabei einstückig geformt, was die Montage des Portionierbehältnisses erleichtert. Das Portionierbehältnis 1 oder dessen Bestandteile 2, 6 sind zudem stapelbar ausgeführt. Hierzu umfasst der Behälter 2 an seinem der Bodenfläche 21b gegenüberliegenden Ende 21e einen umlaufenden ebenen Behälterrand 21r, der als Stapelkante 21s fungiert. Ferner kann das Portionierbehältnis 1 aus einem verzehrbaren Fasermaterial hergestellt sein. Die Abdeckung 6 umfasst hier einen Auslass 6a für das Genussmittel im Volumen V, wodurch das Portionierbehältnis als Becher dienen kann. Der Behälter 2 weist für eine bessere Standfestigkeit an dessen Bodenfläche 21b einen Standring 5 am Übergang zwischen Bodenfläche 21b und Wandfläche 21w auf. Des Weiteren weist der Behälter 2 einen Übergang von Bodenfläche 21b zur Wandfläche 21w auf, der abgerundet ist oder eine oder mehrere diskrete Konturen 9a, vorzugsweise Rippen oder Sicken, aufweist. Zusätzlich weist der Behälter 2 innerhalb der Wandfläche 21w eine oder mehrere diskrete Konturen 9b, vorzugsweise Rippen oder Sicken, auf. Diese Maßnahmen machen den Behälter 2 mechanisch robuster. Der Behälter 2 weist dabei eine Wandfläche 21w mit unterschiedlichen Dicken auf. Die Bodenfläche 21b kann auch als Hohlboden 21hb ausgebildet sein (gestrichelt dargestellt). Des Weiteren kann die Bodenfläche 21b mit oder ohne Standring aufgeraut sein oder eine Riffelung aufweisen. In einer hier nicht gezeigten Ausführungsform kann der Behälter 2, vorzugsweise das gesamte Portionierbehältnis 1, auch sphärisch geformt sein. Als fertiges Portionierbehältnis 1 umfasst dieses das Genussmittel G, wobei die Abdeckung 6 den Behälter 2. In einer Ausführungsform ist das Portionierbehältnis 1 eine Heißgetränkekapsel, vorzugsweise eine Kaffeekapsel.

Fig.2 zeigt verschiedene Ausführungsformen von Behälter 2 und Abdeckung 6 mit Barriereschichtsystemen 8 (a) außen, (b) innen und (c) auf beiden Seiten der Behälter 2 und Abdeckungen 6. Hierbei sind Behälter 2 und Abdeckung 6 jeweils mit einem Barriereschichtsystem 8 mit einer Barrierewirkung zumindest gegen ein Durchdringen von Feuchtigkeit, Wasser, Aromastoffen, Geschmacksstoffen, Geruchsstoffen und/oder nicht lebensmitteltauglichen Stoffen versehen. Das Barriereschichtsystem 8 kann dabei aus biokompatiblen Materialien aufgebaut sein. In Fig.2a ist das Barriereschichtsystem 8 jeweils auf der äußeren Oberfläche 2a des Behälters 2 und der Abdeckung 6 aufgebracht, was verhindert, dass Stoffe von außen in das Fasermaterial 11 eindringen können oder aus dem Fasermaterial 11 nach außen heraustreten können. Hierbei können allerdings Stoffe aus dem Fasermaterial 11 in das Genussmittel G hinein oder umgekehrt vom Genussmittel G in das Fasermaterial 11 gelangen. Diese Art der Beschichtung ist dann besonders zweckmäßig, wenn das Fasermaterial 11gegen Einflüsse von außen geschützt werden muss, beispielsweise Wasser, damit sich das Fasermaterial 11 nicht ungewollt auflöst. In Fig.2b ist das Barriereschichtsystem 8 jeweils auf der inneren Oberfläche 2i des Behälters 2 und der Abdeckung 6 aufgebracht, was das Genussmittel G gegen alle Stoffe aus der Umgebung und dem Fasermaterial 11 schützt und einer Abgabe an Stoffe aus dem Genussmittel G heraus verhindert wird. Diese Art der Beschichtung schützt insbesondere das Genussmittel G vor Beeinträchtigungen von außen und vor beispielsweise Aromaverlust nach außen. In Fig.2c ist das Barriereschichtsystem 8 auf beiden Seiten des Behälters 2 und der Abdeckung 6 aufgebracht, was die Vorteile beider voranstehenden Varianten vereinigt, allerdings einen größeren Aufwand beim Beschichten benötigt. Das Barriereschichtsystem 8 kann dabei eine Wachsschicht, eine Lackschicht, eine Schicht aus PTFE oder eine keramische Schicht, vorzugsweise eine SiOx-Schicht oder eine Glaskeramik, umfassen. Das außen aufgebrachte Barriereschichtsystem 8 kann aus einem Material bestehen, das bedruckbar ist.

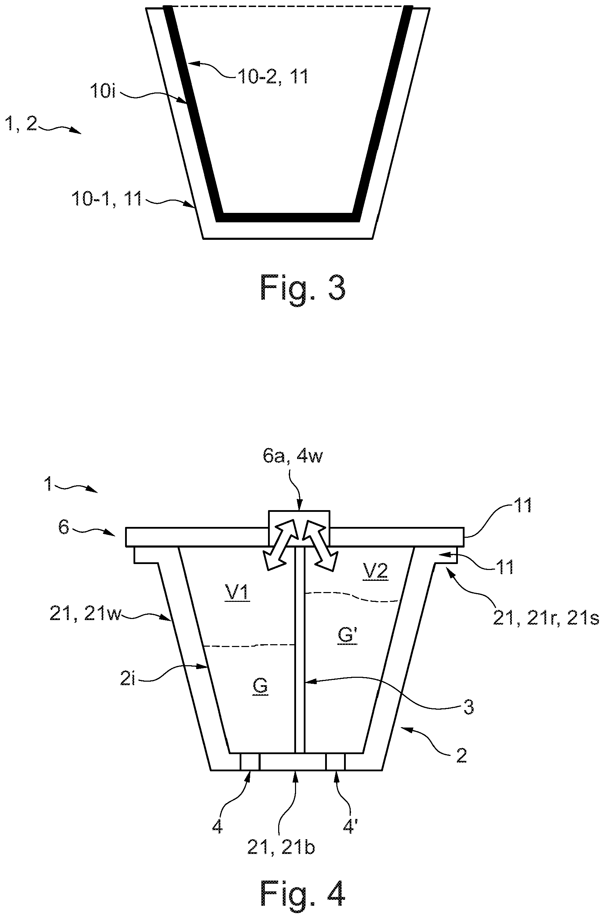

Fig.3 zeigt eine Ausführungsform des Behälters 2 aus ersten und zweiten Formteilen 10-1, 10-2 aus Fasermaterial 11. Hier ist der Behälter 2 aus umweltverträglich abbaubarem Fasermaterial 11 aus einen erstes Formteil 10-1 aus einem ersten Fasermaterial 11 aus einer ersten Pulpe 7a als äußerer Teil des Behälters 2 und aus einem zweiten Formteil 10-2 aus einem Fasermaterial 11 aus einer sich von der ersten Pulpe 7a unterscheidenden zweiten oder weiteren Pulpe 7b als innerer Teil des Behälters 2 gebildet. Die ersten und zweiten Formteile 10-1, 10-2 sind mittels eines Vorpressdrucks VD in der Vorformstation 20 über ihre jeweiligen zueinander zugewandten Oberflächen an einer Schnittstelle 10i fest miteinander verbunden. Das voranstehend für den Behälter 2 des Portionierbehältnisses 1 dargestellt gilt gleichermaßen für die Abdeckung 6, die ebenfalls aus einem ersten Formteil 10-1 und einem zweiten Formteil 10-2 hergestellt werden kann.

Fig.4 zeigt eine Ausführungsform des Portionierbehältnisses 1 mit zwei separaten Volumina V1, V2 gefüllt mit jeweiligen Genussmitteln G, G', damit das Portionierbehältnis 1 mindestens ein zweites Genussmittel G' aufnehmen kann. Dazu ist das in Figur 1 gezeigte abgeschlossene Volumen V hier in zwei voneinander getrennte Volumina V1, V2 aufgeteilt, indem der Behälter 2 eine Trennwand 3 zwischen den getrennten Volumina V1, V2 aufweist. Die Abdeckung 6 umfasst hier einen Auslass 6a für die Genussmittel in den Volumen V1, V2, der als individueller Auslass für jedes Volumen V1, V2 ausgeführt ist. Dieser Auslass 6a kann beispielsweise für Portionierbehältnisse 1 als Trinkbecher verwendet werden (Pfeile mit Pfeilrichtung nach oben). Alternative kann die Abdeckung 6 einen eingehenden Flüssigkeitsstrom in das Volumen V in mindestens zwei Flüssigkeitsströme in jeweilig getrennte Volumina V1, V2 aufteilen (Pfeile mit Pfeilrichtung nach unten). Dazu kann die Abdeckung 6 einen wiederverschließbaren Anstich 4w aufweist, der hier der Übersichtlichkeit halber als dasselbe Teil wie der Auslass 6a dargestellt ist. Die Bodenfläche 21b kann in der alternativen Ausführungsform zwei voneinander getrennte Anstiche 4, 4', jeweils einen für die jeweiligen getrennten Volumina V1, V2, besitzt. In dieser Ausführungsform kann das Portionierbehältnis 1 beispielsweise als Kaffeekapsel für zwei unterschiedliche Kaffees oder für einen Kaffee mit Zusatz, wobei in einem der Volumen V1 beispielsweise das aufzubrühende Kaffeepulver als das eine Genussmittel G und in dem anderen Volumen V2 beispielsweise Milchpulver als das andere Genussmittel G' für einen Milchkaffee eingefüllt ist. Über die beiden Anstiche 4, 4' können die beiden Genussmittel G, G' nach dem Aufbrühen in ein Gefäß zum Verzehr gegeben werden. Das heiße Wasser zum Aufbrühen gelangt über den Anstich 4w in der Abdeckung 6 in die beiden Volumina V1, V2, wobei der Anstich 4w dazu ausgestaltet ist, den Wasserstrom in für die jeweiligen Volumina V1, V2 getrennte Wasserströme (siehe Pfeile) aufzuteilen, wobei die Stärke der jeweiligen aufgeteilten Wasserströme durch die Ausführung des Anstichs 4w voreingestellt wird.

Fig.5 zeigt eine Ausführungsform der erfindungsgemäßen Faserformanlage 100 zur Herstellung von erfindungsgemäßen Portionierbehältnissen 1 umfassend ein Reservoir 15 zur Bereitstellung einer Pulpe 7 als flüssige Lösung mit umweltverträglich abbaubarem Fasermaterial 11; eine Anformstation 20 mit einem Saugwerkzeug 20s mit einer Vielzahl an Saugköpfen angepasst an die Kontur von Behälter 2 und/oder Abdeckung 6 der herzustellenden Portionierbehältnisses 1 zum Anformen der Behälter 2 und/oder Abdeckungen 6 mittels Ansaugen der Pulpe 7 in die jeweiligen Saugköpfe, wobei das Saugwerkzeug 20s auf einer Bewegungseinheit 20b montiert ist, beispielsweise ein Roboter mit Roboterarm; eine Vorformstation 30 zum Vorpressen der angeformten Behälter 2 und/oder Abdeckung 6 der Portionierbehältnisses 1 umfassend das Pulpe-Reservoir 15; eine Heißpressstation 40 zum Endformen der vorgeformten Behälter 2 und/oder Abdeckungen 6 der Portionierbehältnisse 1, wobei die Portionierbehältnisse bzw. die Behälter 2 und/oder die Abdeckungen 6 mittels des Saugwerkzeugs 20s auf ein Vorpress-Unterwerkzeug 41 transferiert werden und in der Heißpressstation 40 zwischen dem Heißpress-Unterwerkzeug 41 und einem entsprechend geformten Heißpress-Oberwerkzeug (hier nicht im Detail gezeigt) heißgepresst werden; eine Beschichtungsstation 50 zum Aufbringen eines Barriereschichtsystems 8 auf die angeformten, vorgeformten oder endgeformten Behälter 2 und/oder Abdeckungen 6 der Portionierbehältnisse 1; und eine Ausgabestation 60 zum Ausgeben der endgeformten Behälter 2 und/oder Abdeckungen 6 oder der Portionierbehältnisse 1 aus der Faserformanlage 100. Die Faserformanlage 100 umfasst des Weiteren hier eine Montagestation 70, 80 zur Befüllung der Behälter 2 mit Genussmitteln G, G' und/oder zum Verschließen der Behälter 2 mit den jeweiligen Abdeckungen 6.

Fig.6 zeigt eine andere Ausführungsform der erfindungsgemäßen Faserformanlage 100 mit zwei Pulpe-Reservoirs 15 mit unterschiedlichen Pulpen 7a, 7b zur Herstellung von Behältern 2 aus ersten und zweiten Formteilen 10-1, 10-2. Hierbei unterscheiden sich die ersten, zweiten und ggf. weiteren Pulpen 7a, 7b in ihren Zusammensetzungen, in ihren Lösungsmitteln, ihren Fasermaterialen, in ihren Konzentrationen und/oder in Anteilen und/oder in ihrer Art von etwaigen Dotierungsstoffen. Die Faserformanlage 100 umfasst hier ein zweites Reservoir 15 mit einer zweiten Pulpe 7b, um über ein partielles zweites Eintauchen 300 des Saugwerkzeugs 20s mit oder ohne sich in den Saugköpfen befindlichen bereits aus der ersten Pulpe 7a angeformten Formteilen 10-1 diese mit einer zweiten Faserschicht als zweites Formteil 10-2 zu überdecken. Damit die beiden Pulpe-Reservoirs 15 für den fortlaufenden Produktionsprozess mit Pulpe 7a, 7b versorgt werden, umfasst die Vorformstation 20 eine Pulpe-Aufbereitungs- und Nachlieferungsstation 35. Außerdem ist das Vorpress-Unterwerkzeug 31 als Multiwerkzeug so an der Vorformstation 30 angeordnet, dass beim Vorformen herausgepresste Lösung bzw. Pulpe aufgefangen und den beiden Pulpe-Reservoirs 15 direkt wieder zugeführt werden kann. Das Saugwerkzeug 20s ist dabei auf einem Roboterarm der Bewegungseinheit 20b angeordnet, da der Roboterarm zuverlässig beide Pulpe-Reservoirs 15 mit dem Saugwerkzeug 20s anfahren kann. Hierzu taucht der Roboterarm beispielsweise das Saugwerkzeug 20s zuerst in das erste Pulpe-Reservoir 15 mit erster Pulpe 7a, damit sich das erste Formteil 10-1 aus der ersten Pulpe 7a anformt. Danach erfolgt ein zweites Eintauchen des Saugwerkzeugs 20s in das zweite Pulpe-Reservoir 15 mit zweiter Pulpe 7b, damit sich auf den bisher angeformten ersten Formteil 10-1 weiteres Fasermaterial 11 aus der zweiten Pulpe 7b als zweites Formteil 10-2 durch den Saugprozess darauf anformt.

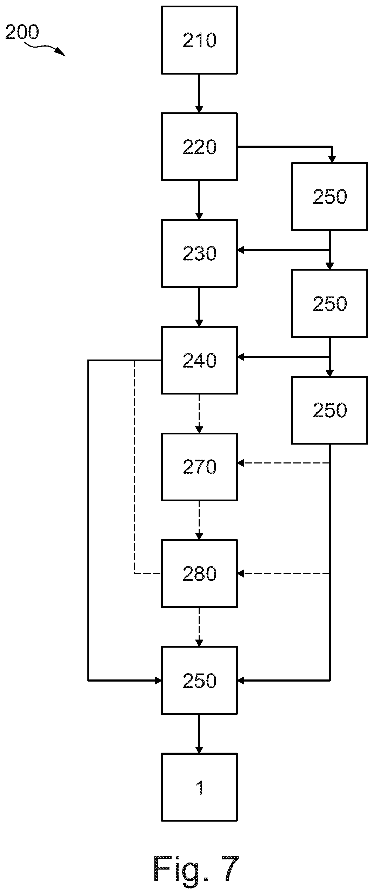

Fig.7 zeigt eine Ausführungsform des erfindungsgemäßen Verfahrens 200 zur Herstellung von erfindungsgemäßen Portionierbehältnissen 1 mit einer erfindungsgemäßen Faserformanlage 100 umfassend die Schritte des Bereitstellens 210 eines Reservoirs 10 einer Pulpe 7 als flüssige Lösung mit umweltverträglich abbaubarem Fasermaterial 11; des Anformens 220 von Behältern 2 und/oder Abdeckungen 6 der herzustellenden Portionierbehältnisse 1 in eine Anformstation 20 mit einem Saugwerkzeug mit einer Vielzahl an Saugköpfen angepasst an die Kontur von Behälter 2 und/oder Abdeckung 6 mittels Ansaugen der Pulpe 7 in die jeweiligen Saugköpfe; des Vorpressens 230 der angeformten Behälter 2 und/oder Abdeckungen 6 der Portionierbehältnisse 1 in einer Vorformstation 30; des Endformens 240 der vorgeformten Behälter 2 und/oder Abdeckungen 6 der Portionierbehältnisse 1 in einer Heißpressstation 40; des Aufbringens 250 eines Barriereschichtsystems 8 auf die angeformten, vorgeformten oder endgeformten Behälter 2 und/oder Abdeckungen 6 der Portionierbehältnisse 1 in einer Beschichtungsstation 50; und des Ausgebens 260 der endgeformten Behälter 2 und/oder Abdeckungen 6 oder der Portionierbehältnisse 1 aus der Faserformanlage 100 mittels einer Ausgabeeinheit 60. Die unterschiedlichen Zeitpunkte, an denen das Barriereschichtsystem 8 aufgebracht werden kann, ist durch mehrerer Aufbringschritte 250 dargestellt. Hierbei werden die Komponenten nicht unbedingt mehrfach beschichtet, sondern können an jeder gezeigte Stelle 250 beschichtet werden. Das Verfahren kann des Weiteren (gestrichelt dargestellt) ein Befüllen 270 der Behälter 2 mit Genussmitteln G, G' in einer Montagestation 70 und/oder ein Verschließen 280 der Behälter 2 mit den jeweiligen Abdeckungen 6 in einer anderen Montagestation 80 umfassen.

Es versteht sich, dass es sich bei dem vorstehend erläuterten Ausführungsbeispiel lediglich um eine erste Ausgestaltung der vorliegenden Erfindung handelt. Insofern beschränkt sich die Ausgestaltung der Erfindung nicht auf dieses Ausführungsbeispiel.

### Liste der verwendeten Bezugszeichen

- 1: Portionierbehältnis
- 2: Behälter
- 2i: innere Oberfläche des Behälters
- 2a: äußere Oberfläche des Behälters
- 21: Fläche des Behälters
- 21b: Bodenfläche des Behälters
- 21hb: Bodenfläche als Hohlboden
- 21e: Ende des Behälters gegenüberliegend der Bodenfläche
- 21r: umlaufender Rand des Behälters
- 21s: Stapelkante des Behälters
- 21w: Wandfläche des Behälters
- 3: Trennwand
- 4, 4': Anstiche der Bodenfläche
- 4w: wiederverschließbarer Anstich
- 5: Standring
- 6: Abdeckung
- 6a: Auslass für das Genussmittel
- 7: Pulpe
- 7a: erste Pulpe
- 7b: zweite Pulpe
- 8: Barriereschichtsystem
- 9a: diskrete Kontur, beispielsweise Rippe oder Sicke, am Übergang von der Bodenfläche zur Wandfläche
- 9b: diskrete Kontur, beispielsweise Rippe oder Sicke, innerhalb der Wandfläche
- 10-1: Erstes Formteil des Behälters (bzw. der Abdeckung)
- 10-2: Zweites Formteil des Behälters (bzw. der Abdeckung)
- 10i: Schnittstelle zwischen erstem und zweitem Formteil
- 11: Fasermaterial

- 15: Reservoir an Pulpe
- 20: Anformstation
- 20s: Saugwerkzeug
- 20b: Bewegungseinheit
- 30: Vorformstation
- 31: Vorpress-Unterwerkzeug
- 35: Pulpe-Aufbereitungs- und Nachlieferungseinheit
- 40: Heißpressstation
- 41: Heißpress-Unterwerkzeug
- 50: Beschichtungsstation
- 60: Ausgabestation
- 70: Montagestation zum Befüllen des Behälters mit Genussmittel
- 80: Montagestation zum Verschließen des Behälters mit der Abdeckung zur Fertigstellung des Portionierbehältnisses
- 90: Steuerungseinheit
- 100: Faserformanlage

- 200: Verfahren zur Herstellung von Portionierbehältnissen
- 210: Bereitstellen eines Reservoirs einer Pulpe
- 220: Anformen von Behältern und/oder Abdeckungen der herzustellenden Portionierbehältnisses
- 230: Vorpressen der angeformten Behälter und/oder Abdeckung der Portionierbehältnisses
- 240: Endformen der vorgeformten Behälter und/oder Abdeckung der Portionierbehältnisses
- 250: Aufbringen eines Barriereschichtsystems auf die angeformten, vorgeformten oder endgeformten Behälter und/oder Abdeckung der Portionierbehältnisses
- 260: Ausgeben der endgeformten Behälter und/oder Abdeckung oder der Portionierbehältnisse aus der Faserformanlage
- 270: Befüllen der Behälter mit Genussmitteln
- 280: Verschließen der Behälter mit den jeweiligen Abdeckungen

- G, G': Genussmittel
- S: Symmetrieachse
- V: abgeschlossenes Volumen
- V1, V2: getrennte Volumina
- VD: Vorpressdruck
- WD: Wanddicke

## Patentansprüche

1. Ein Portionierbehältnis (1) aus einem Behälter (2) zur Aufnahme eines Genussmittels (G, G') und einer Abdeckung (6) zum Verschließen des Behälters zur Erzeugung eines abgeschlossenen Volumens (V) innerhalb des Portionierbehältnisses (1), wobei der Behälter (2) und die Abdeckung (6) aus umweltverträglich abbaubarem Fasermaterial (11) mit einer Faserformanlage (100) mittels eines Faserformprozesses aus einer Pulpe (7, 7a, 7b) als flüssige Lösung mit dem umweltverträglich abbaubarem Fasermaterial (11) hergestellt sind, wobei der Behälter (2) und die Abdeckung (6) mit einem Barriereschichtsystem (8) mit einer Barrierewirkung zumindest gegen ein Durchdringen von Feuchtigkeit, Wasser, Aromastoffen, Geschmacksstoffen, Geruchsstoffen und/oder nicht lebensmitteltauglichen Stoffen versehen sind, **dadurch gekennzeichnet, dass** das Barriereschichtsystem (8) eine Lackschicht oder eine keramische Schicht umfasst.

2. Das Portionierbehältnis (1) nach Anspruch 1,
**dadurch gekennzeichnet,**
**dass** das Portionierbehältnis (1) oder dessen Bestandteile (2, 6) stapelbar sind und dass der Behälter (2) an seinem der Bodenfläche (21b) gegenüberliegenden Ende (21e) einen umlaufenden ebenen Behälterrand (21r), der als Stapelkante (21s) fungiert, umfasst, und wobei der Behälterrand (21r) mittels eines Faserformprozesses aus einer Pulpe (7, 7a, 7b) als flüssige Lösung mit dem umweltverträglich abbaubarem Fasermaterial (11) hergestellt ist.

3. Das Portionierbehältnis (1) nach Anspruch 1 oder 2,
**dadurch gekennzeichnet,**
**dass** das Barriereschichtsystem (8) auf
- einer inneren Oberfläche (2i) des Behälters (2) oder
- auf einer inneren Oberfläche (2i) des Behälters und auch auf einer inneren Oberfläche der Abdeckung (6) aufgebracht ist.

4. Das Portionierbehältnis (1) nach einem der Ansprüche 1 bis 3,
**dadurch gekennzeichnet,**
**dass** die keramische Schicht eine SiOx-Schicht oder eine Glaskeramik umfasst.

5. Das Portionierbehältnis (1) nach einem der voranstehenden Ansprüche,
**dadurch gekennzeichnet,**
**dass** das Barriereschichtsystem (8) auch auf einer äußeren Oberfläche des Behälters (2) und/oder der Abdeckung (6) aufgebracht ist.

6. Das Portionierbehältnis (1) nach einem der voranstehenden Ansprüche,
**dadurch gekennzeichnet,**
**dass** der Behälter (2) aus umweltverträglich abbaubarem Fasermaterial (11) aus einen erstes Formteil (10-1) aus einem ersten Fasermaterial (11) aus einer ersten Pulpe (7a) und aus einem zweiten Formteil (10-2) aus einem Fasermaterial (11) aus einer sich von der ersten Pulpe (7a) unterscheidenden zweiten oder weiteren Pulpe (7b) gebildet ist, wobei die ersten und zweiten Formteile (10-1, 10-2) mittels eines Vorpressdrucks (VD) in der Vorformstation (20) über ihre jeweiligen zueinander zugewandten Oberflächen miteinander verbunden sind.

7. Das Portionierbehältnis (1) nach einem der voranstehenden Ansprüche,
**dadurch gekennzeichnet,**
**dass** das umweltverträglich abbaubare Fasermaterial (11) des Portionsbehältnisses (1) dafür durch ein doppeltes Pressen umfassend ein Vorpressen in einer Vorformstation (20) und Heißpressen in einer Heißpressstation (30) mit einer Temperatur höher als beim Vorpressen entsprechend verdichtet ist.

8. Das Portionierbehältnis (1) nach einem der voranstehenden Ansprüche,
**dadurch gekennzeichnet,**
**dass** das Portionierbehältnis (1) mindestens ein zweites Genussmittel (G') aufnehmen kann, wozu das abgeschlossene Volumen (V) in mindestens zwei voneinander getrennte Volumina (V1, V2) aufgeteilt ist.

9. Das Portionierbehältnis (1) nach Anspruch 8,
**dadurch gekennzeichnet,**
**dass** der Behälter (2) eine Trennwand (3) zwischen den getrennten Volumina (V1, V2) aufweist.

10. Das Portionierbehältnis (1) nach einem der voranstehenden Ansprüche 8 oder 9, **dadurch gekennzeichnet,**
**dass** die Abdeckung (6) mindestens einen Auslass (6a) für das Genussmittel im Volumen (V, V1, V2) umfasst oder
**dass** jedes Volumen (V1, V2) einen der Auslässe (6a) individuell besitzt.

11. Das Portionierbehältnis (1) nach einem der voranstehenden Ansprüche,
**dadurch gekennzeichnet,**
**dass** die Bodenfläche (21b) mindestens zwei voneinander getrennte Anstiche (4, 4') besitzt, und/oder
**dass** die Abdeckung (6) einen wiederverschließbaren Anstich (4w) aufweist.

12. Das Portionierbehältnis (1) nach einem der voranstehenden Ansprüche,
**dadurch gekennzeichnet,**
**dass** der Behälter (2) an dessen Bodenfläche (21b) einen Standring (5) am Übergang zwischen Bodenfläche (21b) und Wandfläche (21w) aufweist, und/oder dass der Behälter (2) einen Übergang von Bodenfläche (21b) zur Wandfläche (21w) aufweist, der abgerundet ist oder eine oder mehrere diskrete Konturen (9a) aufweist, und/oder
**dass** der Behälter (2) innerhalb der Wandfläche (21w) eine oder mehrere diskrete Konturen (9b) aufweist, und/oder
**dass** der Behälter (2) eine Wandfläche (21w) mit unterschiedlichen Dicken aufweist.

13. Das Portionierbehältnis (1) nach Anspruch 12,
**dadurch gekennzeichnet,**
**dass** der Behälter (2) einen Übergang von Bodenfläche (21b) zur Wandfläche (21w) aufweist, der eine oder mehrere Rippen oder Sicken als diskrete Konturen (9a) aufweist, und/oder
**dass** der Behälter (2) innerhalb der Wandfläche (21w) eine oder mehrere Rippen oder Sicken als diskrete Konturen (9b) aufweist.

14. Eine Faserformanlage (100) zur Herstellung von Portionierbehältnissen (1) nach einem der voranstehenden Ansprüche umfassend
- ein Reservoir (15) zur Bereitstellung einer Pulpe (7, 7a, 7b) als flüssige Lösung mit umweltverträglich abbaubarem Fasermaterial (11);
- eine Anformstation (20) mit einem Saugwerkzeug (20s) mit einer Vielzahl an Saugköpfen angepasst an die Kontur von Behälter (2) und Abdeckung (6) der herzustellenden Portionierbehältnisses (1) zum Anformen der Behälter (2) und Abdeckungen (6) mittels Ansaugen der Pulpe (7) in die jeweiligen Saugköpfe;
- eine Vorformstation (30) zum Vorpressen der angeformten Behälter (2) und Abdeckung (6) der Portionierbehältnisses (1);
- eine Heißpressstation (40) zum Endformen der vorgeformten Behälter (2) und Abdeckungen (6) der Portionierbehältnisse (1);
- eine Beschichtungsstation (50) zum Aufbringen eines Barriereschichtsystems (8) auf die angeformten, vorgeformten oder endgeformten Behälter (2) und/oder Abdeckungen (6) der Portionierbehältnisse (1), wobei das Barriereschichtsystem (8) eine Lackschicht oder eine keramische Schicht umfasst; und
- eine Ausgabestation (60) zum Ausgeben der endgeformten Behälter (2) und Abdeckungen (6) oder der Portionierbehältnisse (1) aus der Faserformanlage (100).

15. Die Faserformanlage (100) nach Anspruch 13,
**dadurch gekennzeichnet,**
**dass** die Faserformanlage (100) ein oder mehrere Montagestationen (70, 80) zur Befüllung der Behälter (2) mit Genussmitteln (G) und/oder zum Verschließen der Behälter (2) mit den jeweiligen Abdeckungen (6) umfasst.

16. Ein Verfahren zur Herstellung von Portionierbehältnissen (1) nach einem der Ansprüche 1 bis 12 mit einer Faserformanlage nach einem der Ansprüche 14 bis 15 umfassend nachfolgende Schritte:
- Bereitstellen (210) eines Reservoirs (10) einer Pulpe (7) als flüssige Lösung mit umweltverträglich abbaubarem Fasermaterial (11);
- Anformen (220) von Behältern (2) und Abdeckungen (6) der herzustellenden Portionierbehältnisse (1) in eine Anformstation (20) mit einem Saugwerkzeug mit einer Vielzahl an Saugköpfen angepasst an die Kontur von Behälter (2) und Abdeckung (6) mittels Ansaugen der Pulpe (7) in die jeweiligen Saugköpfe;
- Vorpressen (230) der angeformten Behälter (2) und Abdeckungen (6) der Portionierbehältnisse (1) in einer Vorformstation (30);
- Endformen (240) der vorgeformten Behälter (2) und Abdeckungen (6) der Portionierbehältnisse (1) in einer Heißpressstation (40);
- Aufbringen (250) eines Barriereschichtsystems (8) auf die angeformten, vorgeformten oder endgeformten Behälter (2) und Abdeckungen (6) der Portionierbehältnisse (1) in einer Beschichtungsstation (50), wobei das Barriereschichtsystem (8) eine Lackschicht oder eine keramische Schicht umfasst;
- Ausgeben (260) der endgeformten Behälter (2) und/oder Abdeckungen (6) oder der Portionierbehältnisse (1) aus der Faserformanlage (100) mittels einer Ausgabeeinheit (60).

17. Das Verfahren (200) nach Anspruch 16, umfassend zumindest einen der weiteren Schritte
- Befüllen (270) der Behälter (2) mit Genussmitteln (G, G') in einer Montagestation (70); und/oder
- Verschließen (280) der Behälter (2) mit den jeweiligen Abdeckungen (6) in einer anderen Montagestation (80).

## Claims

1. A portion container (1) consisting of a receptacle (2) for receiving a luxury product (G, G') and a cover (6) for sealing the receptacle in order to produce a sealed volume (V) within the portion container (1), wherein the receptacle (2) and the cover (6) are produced from environmentally degradable fibrous material (11) with a fibre moulding system (100) by means of a fibre moulding process from a pulp (7, 7a, 7b) as liquid solution with the environmentally degradable fibrous material (11), wherein the receptacle (2) and the cover (6) are provided with a barrier layer system (8) having a barrier effect at least against penetration by moisture, water, aromatic substances, flavouring substances, odorous substances and/or substances not suitable for use in foodstuffs, **characterized in that** the barrier layer system (8) comprises a lacquer layer or a ceramic layer.

2. The portion container (1) according to claim 1,
**characterized in that**
the portion container (1) or its components (2, 6) are stackable and **in that** the receptacle (2), at its end (21e) opposite the bottom surface (21b), comprises a circumferential smooth receptacle rim (21r), which functions as a stacking edge (21s), and wherein the receptacle rim (21r) is produced by means of a fibre moulding process from a pulp (7, 7a, 7b) as liquid solution with the environmentally degradable fibrous material (11).

3. The portion container (1) according to claim 1 or 2,
**characterized in that**
the barrier layer system (8) is applied
- to an inner surface (2i) of the receptacle (2) or
- to an inner surface (2i) of the receptacle and also to an inner surface of the cover (6).

4. The portion container (1) according to one of claims 1 to 3,
**characterized in that**
the ceramic layer comprises a SiOx layer or a glass ceramic.

5. The portion container (1) according to one of the preceding claims,
**characterized in that**
the barrier layer system (8) is also applied to an outer surface of the receptacle (2) and/or of the cover (6).

6. The portion container (1) according to one of the preceding claims,
**characterized in that**
the receptacle (2) consisting of environmentally degradable fibrous material (11) is formed of a first moulded part (10-1) consisting of a first fibrous material (11) from a first pulp (7a) and of a second moulded part (10-2) consisting of a fibrous material (11) from a second or further pulp (7b) differing from the first pulp (7a), wherein the first and second moulded parts (10-1, 10-2) are joined to each other over their respective surfaces facing each other by means of a pre-pressing pressure (VD) in the pre-moulding station (20).

7. The portion container (1) according to one of the preceding claims,
**characterized in that**
for that the environmentally degradable fibrous material (11) of the portion container (1) is correspondingly compressed by a double pressing comprising a pre-pressing in a pre-moulding station (20) and hot-pressing in a hot-pressing station (30) with a temperature higher than during the pre-pressing.

8. The portion container (1) according to one of the preceding claims,
**characterized in that**
the portion container (1) can receive at least one second luxury product (G'), for which purpose the sealed volume (V) is divided into at least two volumes (V1, V2) separate from each other.

9. The portion container (1) according to claim 8,
**characterized in that**
the receptacle (2) has a separating wall (3) between the separate volumes (V1, V2).

10. The portion container (1) according to one of the preceding claims 8 or 9, **characterized in that**
the cover (6) comprises at least one outlet (6a) for the luxury product in the volume (V, V1, V2) or
**in that** each volume (V1, V2) has one of the outlets (6a) individually.

11. The portion container (1) according to one of the preceding claims,
**characterized in that**
the bottom surface (21b) has at least two openings (4, 4') separate from each other, and/or in that the cover (6) has a re-sealable opening (4w).

12. The portion container (1) according to one of the preceding claims,
**characterized in that**
the receptacle (2), on its bottom surface (21b), has a stand ring (5) at the transition between bottom surface (21b) and wall surface (21w), and/or
**in that** the receptacle (2) has a transition from bottom surface (21b) to the wall surface (21w) which is rounded or has one or more discrete contours (9a), and/or
**in that** the receptacle (2), within the wall surface (21w), has one or more discrete contours (9b), and/or
**in that** the receptacle (2) has a wall surface (21w) with different thicknesses.

13. The portion container (1) according to claim 12,
**characterized in that**
the receptacle (2) has a transition from bottom surface (21b) to the wall surface (21w) which has one or more ribs or corrugations as discrete contours (9a), and/or
**in that** the receptacle (2), within the wall surface (21w), has one or more ribs or corrugations as discrete contours (9b).

14. A fibre moulding system (100) for producing portion containers (1) according to one of the preceding claims comprising
- a reservoir (15) for providing a pulp (7, 7a, 7b) as liquid solution with environmentally degradable fibrous material (11);
- a partial-moulding station (20) with a suction tool (20s) with a plurality of suction heads adapted to the contour of receptacle (2) and cover (6) of the portion container (1) to be produced for the partial-moulding of the receptacles (2) and covers (6) by means of drawing the pulp (7) into the respective suction heads;
- a pre-moulding station (30) for the pre-pressing of the partial-moulded receptacles (2) and covers (6) of the portion containers (1);
- a hot-pressing station (40) for the finish-moulding of the pre-moulded receptacles (2) and covers (6) of the portion containers (1);
- a coating station (50) for the application of a barrier layer system (8) to the partial-moulded, pre-moulded or finish-moulded receptacles (2) and/or covers (6) of the portion containers (1), wherein the barrier layer system (8) comprises a lacquer layer or a ceramic layer; and
- an output station (60) for the outputting of the finish-moulded receptacles (2) and covers (6) or the portion containers (1) from the fibre moulding system (100).

15. The fibre moulding system (100) according to claim 13,
**characterized in that**
the fibre moulding system (100) comprises one or more assembly stations (70, 80) for filling the receptacles (2) with luxury products (G) and/or for sealing the receptacles (2) with the respective covers (6).

16. A method for producing portion containers (1) according to one of claims 1 to 12 with a fibre moulding system according to one of claims 14 to 15 comprising the following steps:
- provision (210) of a reservoir (10) of a pulp (7) as liquid solution with environmentally degradable fibrous material (11);
- partial-moulding (220) of receptacles (2) and covers (6) of the portion containers (1) to be produced in a partial-moulding station (20) with a suction tool with a plurality of suction heads adapted to the contour of receptacle (2) and cover (6) by means of drawing the pulp (7) into the respective suction heads;
- pre-pressing (230) of the partial-moulded receptacles (2) and covers (6) of the portion containers (1) in a pre-moulding station (30);
- finish-moulding (240) of the pre-moulded receptacles (2) and covers (6) of the portion containers (1) in a hot-pressing station (40);
- application (250) of a barrier layer system (8) to the partial-moulded, pre-moulded or finish-moulded receptacles (2) and covers (6) of the portion containers (1) in a coating station (50), wherein the barrier layer system (8) comprises a lacquer layer or a ceramic layer;
- outputting (260) of the finish-moulded receptacles (2) and/or covers (6) or of the portion containers (1) from the fibre moulding system (100) by means of an output unit (60).

17. The method (200) according to claim 16, comprising at least one of the further steps
- filling (270) of the receptacles (2) with luxury products (G, G') in an assembly station (70); and/or
- sealing (280) of the receptacles (2) with the respective covers (6) in another assembly station (80).

## Revendications

1. Capsule (1) fabriquée à partir d'un récipient (2) permettant de recevoir un produit stimulant (G, G') et permettant de fermer le récipient à partir d'un couvercle (6) pour produire un volume isolé (V) à l'intérieur de la capsule (1), dans laquelle le récipient (2) et le couvercle (6) sont fabriqués à partir d'une matière fibreuse biodégradable (11), à l'aide d'une installation de mise en forme de fibres (100), au travers d'un processus de mise en forme de fibres, à partir d'une pulpe (7, 7a, 7b) prenant la forme d'une solution fluide contenant la matière fibreuse biodégradable (11), dans laquelle le récipient (2) et le couvercle (6) sont pourvus d'un système de couche barrière (8) offrant un effet barrière au moins contre une pénétration d'humidité, d'eau, de substances aromatiques, de substances gustatives, de substances olfactives et/ou de substances de nature non alimentaire, **caractérisée en ce que** le système de couche barrière (8) est une couche de vernis ou une couche céramique.

2. Capsule (1) selon la revendication 1, **caractérisée en ce que** :
la capsule (1) ou ses composants (2, 6) sont empilables et que le récipient (2) comprend au niveau de son extrémité (21e) opposée à la surface de fond (21b) un bord de récipient (21r) plan périphérique servant de bord de pile (21s) et dans laquelle le bord de récipient (21r) est fabriqué à l'aide d'un processus de mise en forme de fibres, à partir d'une pulpe (7, 7a, 7b) prenant la forme d'une solution fluide contenant la matière fibreuse biodégradable (11).

3. Capsule (1) selon la revendication 1 ou 2, **caractérisée en ce que** le système de couche barrière (8) est appliqué sur :
- une surface intérieure (2i) du récipient (2) ; ou
- sur une surface intérieure (2i) du récipient ainsi que sur une surface intérieure du couvercle (6).

4. Capsule (1) selon l'une quelconque des revendications 1 à 3, **caractérisée en ce que** :
la couche céramique comprend une couche SiOx ou une couche vitrocéramique.

5. Capsule (1) selon l'une quelconque des revendications précédentes, **caractérisée en ce que** :
le système de couche barrière (8) est appliqué sur une surface extérieure du récipient (2) et/ou du couvercle (6).

6. Capsule (1) selon l'une quelconque des revendications précédentes, **caractérisée en ce que** :
le récipient (2) en matière fibreuse biodégradable (11) est formé à partir d'une première pièce moulée (10-1) réalisée à partir d'une première matière fibreuse (11) obtenue à partir d'une première pulpe (7a) et à partir d'une deuxième pièce moulée (10-2) réalisée à partir d'une matière fibreuse (11) obtenue à partir d'une deuxième pulpe (7b) ou d'une autre pulpe différente de la première pulpe (7a), dans laquelle les première et deuxième pièces moulées (10-1, 10-2) sont reliées entre elles au travers d'une précompression (VD) réalisée par la station de préformage (20) via les surfaces respectives orientées l'une vers l'autre.

7. Capsule (1) selon l'une quelconque des revendications précédentes, **caractérisée en ce que** :
la matière fibreuse (11) biodégradable du récipient de capsule (1) est comprimée de façon correspondante par une double compression comprenant une précompression réalisée dans une station de préformage (20) et une compression à froid réalisée dans une station de compression à froid (30) avec une température supérieure à celle de la précompression.

8. Capsule (1) selon l'une quelconque des revendications précédentes, **caractérisée en ce que** :
la capsule (1) peut recevoir au moins un deuxième produit stimulant (G'), ce pour quoi le volume isolé (V) est séparé en au moins deux volumes (V1, V2) distincts.

9. Capsule (1) selon la revendication 8, **caractérisée en ce que** :
le récipient (2) comporte une paroi de séparation (3) prévue entre les volumes (V1, V2) distincts.

10. Capsule (1) selon l'une quelconque des revendications précédentes 8 ou 9, **caractérisée en ce que** :
le couvercle (6) comprend au moins une sortie (6a) pour le produit stimulant contenu dans le volume (V, V1, V2) ; ou
chaque volume (V1, V2) possède individuellement une des sorties (6a).

11. Capsule (1) selon l'une quelconque des revendications précédentes, **caractérisée en ce que** :
la surface de fond (21b) possède au moins deux mises en perce (4, 4') distinctes ; et/ou
le couvercle (6) comporte une mise en perce (4w) pouvant être refermée.

12. Capsule (1) selon l'une quelconque des revendications précédentes, **caractérisée en ce que** :
le récipient (2) comporte au niveau de sa surface de fond (21b) une bague de maintien (5) située au niveau de la transition entre la surface de fond (21b) et la surface de paroi (21w) ; et/ou
le récipient (2) comporte une transition de surface de fond (21b) en direction de la surface de paroi (21w) qui est arrondie ou comporte un ou plusieurs contours (9a) distincts ; et/ou
le récipient (2) comporte un ou plusieurs contours (9b) distincts à l'intérieur de la surface de paroi (21w) ; et/ou
le récipient (2) présente une surface de paroi (21w) avec différentes épaisseurs.

13. Capsule (1) selon la revendication 12, **caractérisée en ce que** :
le récipient (2) présente une transition de la surface de fond (21b) vers la surface de paroi (21w) qui comporte un ou plusieurs renforts ou collets prenant la forme de contours distincts (9a) ; et/ou
le récipient (2) comporte à l'intérieur de la surface de paroi (21w) un ou plusieurs renforts ou collets prenant la forme de contours distincts (9b).

14. Installation de mise en forme de fibres (100) destinée à la fabrication de capsules (1) selon l'une quelconque des revendications précédentes, comprenant :
- un réservoir (15) pour la mise à disposition d'une pulpe (7, 7a, 7b) sous la forme d'une solution fluide contenant de la matière fibreuse biodégradable (11) ;
- une station de formage (20) avec un outil d'aspiration (20s) avec une pluralité de tête d'aspiration adaptées au contour du récipient (2) et du couvercle (6) de la capsule (1) à fabriquer pour former le récipient (2) et des couvercles (6) par aspiration de la pulpe (7) dans la tête d'aspiration respective ;
- une station de préformage (30) servant à la précompression du récipient (2) et du couvercle (6) formés de la capsule (1) ;
- une station de compression à froid (40) servant au formage final du récipient (2) et du cache (6) de la capsule (1) ;
- une station de revêtement (50) servant à appliquer un système de couche barrière (8) sur les récipients (2) et/ou les couvercles (6) formés, préformés ou finis des capsules (1), dans laquelle le système de couche barrière (8) comprend une couche de vernis ou une couche céramique ; et
- une station d'évacuation (60) servant à évacuer les récipients (2) et les couvercles (6) finis ou les capsules (1) hors de l'installation de mise en forme de fibres (100) .

15. L'installation de mise en forme de fibres (100) selon la revendication 13, **caractérisée en ce que** :
l'installation de mise en forme de fibres (100) comprend une ou plusieurs stations de montage (70, 80) servant à remplir les récipients (2) en produits stimulants (G) et/ou à fermer les récipients (2) à l'aide d'un des couvercles (6) respectifs.

16. Procédé de fabrication de capsules (1) selon l'une quelconque des revendications 1 à 12, avec une installation de mise en forme de fibres selon l'une quelconque des revendications 14 à 15, comprenant les étapes suivantes :
- mise à disposition (210) d'un réservoir (10) d'une pulpe (7) prenant la forme d'une solution fluide contenant la matière fibreuse biodégradable (11) ;
- formage (220) des récipients (2) et des couvercles (6) des capsules (1) à fabriquer dans une station de formage (20) avec un outil d'aspiration doté d'une pluralité de têtes d'aspiration adaptées au contour du récipient (2) et du couvercle (6) par aspiration de la pulpe (7) dans la tête d'aspiration respective ;
- précompression (230) des récipients (2) et des couvercles (6) formés des capsules (1) dans une station de préformage (30) ;
- formage final (240) des récipients (2) et des couvercles (6) préformés des capsules (1) dans une station de compression à froid (40) ;
- application (250) d'un système de couche barrière (8) sur les récipients (2) et couvercles (6) formés, préformés ou finis des capsules (1) dans une station de revêtement (50), le système de couche barrière (8) comprenant une couche de vernis ou une couche céramique ;
- évacuation (260) des récipients (2) et/ou couvercles (6) finis ou des capsules (1) hors de l'installation de mise en forme de fibres (100) au moyen d'une unité d'évacuation (60) .

17. Procédé (200) selon la revendication 16, comprenant au moins une des étapes supplémentaires suivantes :
- remplissage (270) des récipients (2) en produits stimulants (G, G') dans une station de montage (70) ; et/ou
- fermeture (280) des récipients (2) avec les couvercles (6) respectifs dans une autre station de montage (80).
